# EUROPÄISCHE PATENTSCHRIFT

(11) **EP 1 699 884 B1**
(45) Veröffentlichungstag und Bekanntmachung des Hinweises auf die Patenterteilung: **17.02.2010**
(21) Anmeldenummer: 04804257.6
(22) Anmeldetag: 23.12.2004
(51) Int. Cl.: C09C 1/62, C09C 1/64, C09C 1/00, C09D 5/03, C09D 5/36

(54) **METALLPIGMENTE MIT VERNETZBARER BINDEMITTELBESCHICHTUNG, BESCHICHTUNGSZUSAMMENSETZUNG, VERFAHREN ZUR HERSTELLUNG DER BESCHICHTETEN METALLPIGMENTE UND DEREN VERWENDUNG**
METAL PIGMENTS COMPRISING A CROSS-LINKABLE BINDING AGENT COATING, COATING COMPOSITION, METHOD FOR THE PRODUCTION OF COATED METAL PIGMENTS AND USE THEREOF
PIGMENTS METALLIQUES A REVETEMENT DE LIANT RETICULABLE, COMPOSITION DE REVETEMENT, PROCEDE DE PRODUCTION DESDITS PIGMENTS METALLIQUES A REVETEMENT ET LEUR UTILISATION

(30) Priorität: 23.12.2003 DE 10361437
(43) Veröffentlichungstag der Anmeldung: 13.09.2006
(73) Patentinhaber: Eckart GmbH, 91235 Hartenstein (DE)
(72) Erfinder: HENGLEIN, Frank, 90409 Nürnberg (DE); SCHREIBER, Burkhard, 91217 Hersbruck (DE); ALBRECHT, Alexander, 91077 Dormitz (DE)
(74) Vertreter: Walcher, Armin
(86) Internationale Anmeldenummer: PCT/EP2004/014663
(87) Internationale Veröffentlichungsnummer: WO 2005/063897

(56) Entgegenhaltungen:
- WO-A-99/57204
- WO-A-2004/029160
- DE-A1- 10 209 359
- US-A- 4 213 886

## Beschreibung

Die vorliegende Erfindung betrifft die Bereitstellung beschichteter Metallpigmente, eine Beschichtungszusammensetzung, ein Verfahren zur Herstellung der beschichteten Metallpigmente und deren Verwendung.

Metallpigmente finden vielfach Verwendung in der Pigmentierung von Farben, Lacken, Pulverlacken, Druckfarben, Kunststoffen oder Kosmetika. Die Einbringung und Benetzung dieser Pigmente in Bindemittelsysteme bereitet vielfach Probleme, insbesondere bei Pulverlacken.

Metallpigmente können nicht - wie bei organischen oder anorganischen Buntpigmenten üblich - durch Extrusion und anschließende Zerkleinerung des Extrudates in Pulverlacke eingearbeitet werden, da hierdurch die plättchenförmigen Pigmente gebrochen und ihren optischen Effekt verlieren würden. Statt dessen verwendet man sogenannte Dry-blend- oder Bonding-Verfahren.

Unter Dry-blend-Verfahren versteht man einen einfachen Mischvorgang, bei dem Pulverlackkomponenten wie Bindemittel, Additive etc. und die Metallpigmente trocken miteinander vermengt werden. Nachteilig ist, daß solche Trockenmischungen u.a. aufgrund der unterschiedlichen spezifischen Gewichte und elektrostatischen Aufladeverhaltens während der Pulverlackbeschichtung zur Entmischung von Metallpigment und Bindemittel führen. Die Recyclierbarkeit des Pulverlackes, die an und für sich einer der großen Vorteile von Pulverlacksystemen darstellt, ist bei nach diesem Verfahren hergestellten, mit Metallpigmenten pigmentierten Pulverlacken nicht mehr gegeben.

Unter Bonding-Verfahren versteht man einen Mischvorgang von Pulverlack und Metallpigment, bei dem durch Erwärmen der Mischung bis an die Glastemperatur des Pulverlackes eine physikalische Anbindung der Metallpigmentteilchen an die Pulverlackteilchen erreicht wird. Bei dem Bonding-Verfahren erfolgt mithin eine Anhaftung der Metallpigmente an der Oberfläche der Pulverlackteilchen.

Sowohl beim Dry-blend- als auch beim Bonding-Verfahren ist nachteilig, daß die Metallpigmente nicht von dem Bindemittel umhüllt sind und mithin ohne Bindemittelumhüllung auf ein Substrat aufgebracht werden. Bei dem anschließenden Härtungsprozess, üblicherweise einem Einbrennprozess, kommt es zu keiner vollständigen Benetzung dieser Pigmente mit dem Bindemittel. Hierdurch werden die Metallpigmente nach der Aushärtung des Pulverlackes nicht vollständig vom Bindemittel umgeben und erfahren dadurch auch nicht einen optimalen Korrosionsschutz.

Besonders kritisch ist dies insbesondere für Metallpigmente, die an oder in der Nähe der Oberfläche der Pulverbeschichtung lokalisiert sind. Insbesondere bei Pulverlackanwendungen weisen in der Praxis selbst Metallpigmente, die eigentlich ein "non-leafing"-Verhalten zeigen in einem gewissen Umfang auch noch Metallpigmente mit einem "leafing"-Verhalten auf. Diese Pigmentteilchen sind der Einwirkung korrosiver Einflüsse der Umgebung und mechanischer Belastungen besonders intensiv ausgesetzt. Daher wirkt sich eine dünne bis mangelhafte Beschichtung mit dem ausgehärteten Bindemittel hier besonders kritisch aus. Dies führt äußerst.nachteilig zu einer starken Beeinträchtigung des gewünschten optischen Effektes. Zudem handelt es sich bei Pulverlackbeschichtungen meist um Einschichtlackierungen, so daß hier der schützende Effekt eines Klarlackes fehlt. Gerade bei Außenanwendungen ergeben sich jedoch besonders hohe Ansprüche an Metallpigmente hinsichtlich der Effekt- und Korrosionsstabilität.

Zur Verbesserung der anwendungstechnischen Eigenschaften oder zum Schutze der Pigmente gegen korrosive Angriffe können Metallpigmente vor der Einarbeitung in Lacksysteme durch verschiedene Verarbeitungsschritte veredelt werden. Dies können unter anderem nasschemische Prozesse sein, bei denen eine mehr oder weniger geschlossene Beschichtung der Pigmentoberfläche erfolgt. Möglich sind hierbei organische oder anorganische Beschichtungen.

Die US 4,434,009 beschreibt die Beschichtung eines Metallpigmentes mit einem Polymeren. Die Beschichtung wird aus den Monomeren aufgebaut, welche eine polymerisierbare Doppelbindung und eine Epoxygruppe besitzen.

Eine andere Polymerbeschichtung von Metallpigmenten wird in der JP 56-161470 beschrieben. Hier erfolgt die Beschichtung durch Monomere vom Typ Styrol, (Meth)acrylonitril oder (Meth)acrylsäure.

Ähnliche polymerbeschichtete Metallpigmente werden in der Offenlegungsschrift DE 25 26 093 beschrieben.

In der EP 0 280 749 sind Beschichtungen von Metallpigmenten mit Kunstharz beschrieben, die zunächst eine Haftvermittlerschicht mit mindestens einer ethylenisch ungesättigten Doppelbindung umfassen. Anschließend folgt ein polymerisiertes Kunstharz, welches aus Monomeren mit mindestens drei ethylenisch ungesättigten Bindungen aufgebaut wird. Die chemische Variabilität der verwendeten Monomeren der EP 0 280 749 ist sehr stark eingeschränkt. Ethylenisch dreifach ungesättigte Monomere ergeben hochvernetzte Polymerschutzschichten, aus denen jedoch kein Lack aufgebaut werden kann. Derartige Polymerschichten wären für den Aufbau eines Lackes zu spröde. Drei- oder noch höherwertig vernetzende Monomere werden als Vernetzer in Lacken lediglich in Mengen bis zu ca. 3 Gew.-% eingesetzt; keinesfalls jedoch werden ganze Polymerschichten aus diesen aufgebaut.

In ähnlicher Weise beschreibt die DE 40 30 727 bzw. EP 0 477 433 eine Metallpigmentbeschichtung aus einem dreidimensional vernetzten Kunststoffüberzug, der kovalent auf eine zuvor auf das Pigment aufgebrachte Siloxanschicht angebunden ist. Es werden geschützte Pigmente erhalten, die in Wasserlacken Verwendung finden können. Gemäß der Lehre dieser beiden Patente müssen vor der eigentlichen Kunststoffharzbeschichtung Haftvermittler auf die Oberfläche der Metallflakes aufgebracht werden, da anderenfalls eine wirksame Beschichtung nicht möglich ist.

Allen diesen vorstehenden Polymerbeschichtungen ist gemeinsam, daß sie ausschließlich aus Monomeren hergestellt werden. Diese werden meist in einer radikalischen Polymerisation in Gegenwart der in einem Lösemittel dispergierten Metallpigmente polymerisiert.

Ferner können Oberflächenmodifikationen durch Aufbringen von oberflächenaktiven Substanzen auf das Pigment zur besseren Benetzung und Anbindung an ein Bindemittel erfolgen (EP 1 084 198).

Des weiteren können insbesondere bei Pulverlacken Verfahren angewendet werden, bei denen die Oberfläche von Pulverlackpartikeln mit Farb- oder Metallpigmenten belegt wird (DE 100 58 860 A1). Nachteilig ist hierbei, daß die Metallpigmente an der Oberfläche der Pulverlackpartikel haften und, wie bereits oben ausgeführt, nicht von dem Pulverlack umhüllt bzw. nicht in den Pulverlack eingebunden werden, was letztendlich zu einer Korrosion der Metallpigmente nach Applikation führt.

Die WO 98/37154 offenbart ein Verfahren zur Herstellung von Glanzpigment-haltigen Pulverlacken unter Verwendung eines überkritischen Fluids. Dieses Verfahren ist in apparativer Hinsicht sehr aufwendig und kostenintensiv. Bei diesem Verfahren werden die Glanzpigmentpartikel im Pulverlackkorn verteilt. Nachteiligerweise werden die einzelnen Pigmente nicht zuverlässig mit einer Beschichtung versehen, so daß es bei Metallpigmenten während der Lagerung und nach der Applikation zu Korrosionsproblemen kommt.

Aus der WO 98/46682 ist ein Pulverlack bekannt, bei dem die Pulverlackpartikel an einer klebrigen Metallpigmentoberfläche anhaften. Nachteiligerweise wird zum einem der Pulverlack nicht zuverlässig und gleichmäßig von den klebrigen Metallpigmentoberflächen gebunden. Diese ungleichmäßige Anhaftung der Pulverlackpartikel führt bei der Lackierung zu ungleichmäßigen Lackoberflächen. Auch kommt es aufgrund der klebrigen Metallpigmentoberflächen leicht zu Agglomeraten und/oder Aggregaten der Metallpigmentteilchen im Pulverlack. Des weiteren sind die Metallpigmente ebenfalls nicht zuverlässig von einer Beschichtung umhüllt, so daß diese Metallpigmente auch nicht korrosionsstabil sind.

Aus der WO 99157204 A1 sind mit Oberflächenmodifizierungsmitteln beschichtete Effektpigmente bekannt.

Die US 4,213,886 offenbart mit einer Acrylschicht beschichtete Aluminiumeffektpigmente.

Die DE 102 09 359 A1 offenbart mit gehärtetem Melamin-Formaldehyd-Harz beschichtete plättchenförmige Trägermaterialien.

Die WO 2004/029160 A1 offenbart mit LCST- und/oder UCST-Polymeren umhüllte Effektpigmente.

Bei den vorbekannten Pigmentbeschichtungen sind die resultierenden Metallpigmente entweder mit anorganischen oder vernetzten polymeren Schichten versehen, die nicht mehr an Vernetzungsreaktionen mit pulverlacktypischen oder nasslacktypischen Bindemitteln und/oder Härtern teilnehmen und somit nicht in die Kunststoffmatrix eingebunden werden können, oder die Pigmente sind nicht ausreichend gegenüber Korrosion stabilisiert.

Aufgabe der vorliegenden Erfindung ist es daher, ein Metallpigment bereit zu stellen, welches aufgrund einer höchst wirksamen Beschichtung hohe chemische und mechanische Beständigkeit aufweist und sich problemlos in ein Anwendungsmedium einarbeiten läßt. Als Anwendungsgebiete sind hier insbesondere kritische Anwendungen wie z.B. Fassadenbeschichtungen zu nennen, welche in der Regel der gesamten Bandbreite an Umwelteinflüssen schutzlos ausgesetzt sind und äußerst lange Verwendungszeiten überstehen müssen.

Bei Pulverlackanwendungen ist zudem eine verbesserte Recyclierbarkeit des metallpigmentierten Pulverlackes in der Rückgewinnungsanlage der Beschichtungskabine erwünscht.

Des weiteren ist erwünscht, daß ein solches Metallpigment als staubarmes, rieselfähiges Pulver vorliegt und ferner eine universelle Verwendbarkeit in vielen pulverlack- und nasslacktypischen Systemen gewährleistet ist.

Aufgabe der Erfindung ist es ferner ein kostengünstiges Verfahren mit hohen Durchsatzmengen zur Herstellung solcher Metallpigmente bereitzustellen. Das Verfahren sollte einfach sein und eine schonende Behandlung der Metallpigmente gewährleisten.

Die der Erfindung zugrundeliegende Aufgabe wird durch die Bereitstellung von Metallpigmenten mit einer Beschichtung gelöst, wobei die Beschichtung die Metallpigmente umhüllt und chemisch vernetzbare(s) und/oder unter Einwirkung von Wärme, IR-Strahlung, UV-Strahlung und/oder Elektronenstrahlen vernetzbare(s) oligomere(s) und/oder polymere(s) thermoplastisches Bindemittel umfaßt, wobei die beschichteten Metallpigmente als Pulver, welches eine Korngröße d₅₀ von weniger als 190 µm aufweist, vorliegen und nach Aushärtung in einem Pulverlack korrosionsbeständig sind, wobei die Metallpigmente 20 bis 85 Gew.-% an oligomerem und/oder polymerem Bindemittel aufweisen, bezogen auf das Gesamtgewicht der beschichten Metallpigmente.

Bevorzugte Weiterbildungen sind in den Unteransprüchen angegeben.

Die Aufgabe der Erfindung wird ferner durch Bereitstellung eines Masterbatches für Pulverlacke und Naßlacke gelöst, wobei das Masterbatch Metallpigmente nach einem der Ansprüche 1 bis 24 enthält.

Vorteilhafterweise sind die zur Umhüllung des Metallpigmentes verwendeten Bindemittel die gleichen, die in einem Pulverlack als Bindemittel verwendet werden. Damit eignen sich solche erfindungsgemäßen Bindemittel als Masterbatch oder Konzentrat zur Herstellung eines Metallpigment-haltigen Pulverlacks.

Bei Verwendung von gleichen Bindemitteln in der Beschichtung der erfindungsgemäßen Metallpigmente wie in dem Pulverlack kommt es nach Aufbringung und Aushärtung des Pulverlacks zur Ausbildung einer homogenen Lackschicht, in der die Metallpigmente chemisch eingebunden sind. Solche Lackschichten weisen ein äußerst ansprechendes Aussehen auf und sind korrosionsbeständig.

Die der Erfindung zugrundeliegende Aufgabe wird auch durch Bereitstellung einer Beschichtungszusammensetzung gelöst, wobei die Beschichtungszusammensetzung Metallpigmente nach einem der Ansprüche 1 bis 25 enthält, wobei die Metallpigmente nach Aushärtung der Beschichtungszusammensetzung korrosionsbeständig sind.

Bevorzugte Ausführungen sind in den Unteransprüchen angegeben.

Weiterhin wird die Aufgabe durch Bereitstellung eines beschichteten Gegenstands gelöst wobei der Gegenstand mit Metallpigmenten gemäß einem der Ansprüche 1 bis 25 oder mit einer Beschichtungszusammensetzung gemäß einem der Ansprüche 27 bis 31 beschichtet ist.

Der beschichtete Gegenstand ist vorzugsweise ein Gegenstand, der korrodierenden Umgebungsbedingungen, beispielsweise den natürlichen Wetterbdingungen, ausgesetzt wird. Dies ist beispielsweise ein Fassadenelement wie eine Fassadenplatte, ein Fensterrahmen, eine Fahrzeugkarosserie wie die Karosserie eines Kraftfahrzeuges oder ein Rahmen eines Fahrzeugs wie eines Fahrrads oder Motorrads.

Die Aufgabe der Erfindung wird auch durch Verwendung des Metallpigmentes nach einem der Ansprüche 1 bis 24 in Farben, Lacken, Pulverlacken, Druckfarben, Kunststoffen oder Nagellack gelöst.

Die Aufgabe der Erfindung wird auch durch Bereitstellung eines Nagellacks, gelöst, wobei das Kosmetikum Metallpigmente nach einem der Ansprüche 1 bis 25 enthält.

Die erfindungsgemäßen Metallpigmente weisen mithin eine umhüllende Beschichtung aus vernetzbaren Bindemitteln in ihrer oligomeren bzw. polymeren Ausgangsform auf. Die Bindemittel können, je nach ihrer chemischen Natur, unter Einwirkung von Wärme, IR-, UV- und/oder Elektronen-Strahlung oder auch durch Reaktion mit einem geeigneten Härter nach der Umhüllung des Metallpigmentes polymerisieren und somit die Metallpigmente in einen polymeren Film einbetten. Die vollständige Umhüllung führt zu einer wesentlich besseren abrasiven und chemischen Stabilität des Metallpigmentes. Die auf diese Weise erreichten Bewitterungsstabilitäten können mit herkömmlichen Metallpigmenten nicht erreicht werden.

Unter "korrosionsstabil" wird im Sinne der Erfindung verstanden, daß das optische Erscheinungsbild der Metallpigmente nach Einarbeitung in einen Pulverlack und Aufbringung und Aushärtung dieses Pulverlacks auch nach langer Zeit, wie Monaten und Jahren, nicht bzw. nur unwesentlich beeinträchtigt wird. Als Maß für die Korrosionsstabilität kann insbesondere der Mörteltest nach den Vorschriften der GSB (Gütegemeinschaft für die Stückbeschichtung von Bauteilen e.V.), wie in den Beispielen beschrieben, herangezogen werden. Das Bestehen dieses sehr scharfen Korrosionstests ist Voraussetzung für die Verwendung von metallpigmentierten Pulverbeschichtungen bei Fassadenelementen. Ein Bestehen des Mörteltests, wie weiter unten beschrieben, bedeutet, daß Korrosionsstabilität im Sinne der Erfindung vorliegt.

Die erfindungsgemäß beschichteten Metallpigmente liegen vorzugsweise in Form eines staubarmen, rieselfähigen Pulvers vor, welches gegebenenfalls auch mit Lösemitteln, beispielsweise organischen Lösemitteln und/oder Wasser, angepastet werden kann. Die erfindungsgemäßen Metallpigmente zeichnen sich somit durch eine hohe Flexibilität in der Anwendung aus.

Unter Metallpigmenten werden im Sinne der Erfindung plättchenförmige Metalleffektpigmente verstanden. Diese besitzen einen Formfaktor, d.h. ein Verhältnis von Längsausdehnung zur mittleren Dicke der Plättchen, von über 10, bevorzugt von über 20 und besonders bevorzugt von über 50. Weiter bevorzugt liegt der Formfaktor in einem Bereich von 50 bis 1000, noch weiter bevorzugt von 100 bis 200. Unter Längsausdehnung wird hierbei der d₅₀-Wert der Summendurchgangsverteilung, wie sie mit den üblichen Lasergranulometriemethoden gemessen werden, verstanden. Die d₅₀-Werte der Längsausdehnungen betragen hierbei 2 bis 150 µm, bevorzugt 3 bis 75 µm und besonders bevorzugt 5 bis 60 µm.

Bei Pulverlackanwendungen ergibt sich eine hervorragende Recyclierbarkeit des metallpigmentierten Pulverlackes. Der nicht auf einem Substrat ausgehärtete Anteil des Pulverlacks, der die erfindungsgemäßen Metallpigmente enthält, kann vorteilhafterweise zurückgeführt werden und bei der nächsten Pulverlackapplikation erneut aufgesprüht werden.

Unter einem Bindemittel wird erfindungsgemäß die in der DIN 55 945 angegebene Definition verstanden. D.h., das Bindemittel umfaßt sowohl den Filmbildner wie auch nicht flüchtige Hilfsstoffe wie Weichmacher und Trockenstoffe.

Die Bindemittel liegen in der Regel als Oligomere und/oder Polymere mit niedrigem Molekulargewicht vor. Das Molekulargewicht liegt vorzugsweise in einem Bereich von 200 g/mol bis 10.000 g/mol, weiter bevorzugt von 500 g/mol bis 8.000 g/mol. Die niedrigen Molekulargewichte der verwendeten Oligomeren und/oder Polymeren dienen der Einstellung bestimmter Viskositäten, die weder mit monomer gelösten noch mit hochmolekularen Bestandteilen möglich sind (s.a. P. Nanetti, Coatings Compendien "Lackrohstoffkunde" S. 17 ff., Vincentz Verlag 2000). Die bei der vorliegenden Erfindung verwendeten oligomeren und/oder polymeren Bindemittel werden nachfolgend aus Gründen der Vereinfachung auch lediglich als Bindemittel bezeichnet.

Härter liegen üblicherweise in monomerer Form vor. Die zunächst thermoplastisch vorliegenden Bindemittel bzw. Bindemittel und ein gegebenenfalls verwendeter Härter reagieren unter geeigneten Bedingungen wie z.B. erhöhter Temperatur miteinander unter Bildung eines Duromeren. Hierbei können Polymerisationen und bei der Verwendung von Härtern, Polykondensation oder auch Polyadditionen auftreten.

Dies unterscheidet die Beschichtung der erfindungsgemäßen Metallpigmente auch wesentlich von den im Stand der Technik vorhandenen Polymerbeschichtungen. Die Bindemittel sind nach der Beschichtung der Metallpigmente noch härtbar oder polymerisierbar. Dabei können die Bindemittel während der Beschichtung und dem Verdampfen des Lösemittels durchaus leicht anpolymerisieren, jedoch nicht durchhärten. Die bislang bekannten Kunststoffbeschichtungen von Metallpigmenten hingegen werden aus Monomeren gebildet, die sich möglichst vollständig zu einem polymeren Film auf der Pigmentoberfläche umsetzen. Diese überwiegend ausgehärteten Polymere sind nicht mehr reaktiv.

Die erfindungsgemäßen Metallpigmente weisen mithin eine reaktive Bindemittelbeschichtung auf, die nach der Applikation des erfindungsgemäßen Metallpigmentes gezielt eine Reaktion mit dem Bindemittel, bspw. eines Lackes oder einer Druckfarbe, ermöglicht. Die Bindemittel umfassende Beschichtung der beschichteten Metallpigmente kann auch erst nach der Applikation aushärten, ohne mit dem Bindemittel des Applikationsmediums, bspw. einem Lack oder einer Druckfarbe, zu vernetzen. Dies kann bei einer chemischen Inkompatibilität von Bindemittel des Applikationsmediums und der Bindemittel-haltigen-Beschichtung gegeben sein.

Das oder die Bindemittel wird/werden vorzugsweise ausgewählt aus der Gruppe der üblicherweise in Pulverlacken eingesetzten Bindemittel wie
- carboxylgruppenhaltige Polyester, vorzugsweise gesättigte carboxylgruppenhaltige Polyester. Hierbei handelt es sich um reaktive Verbindungen mit einer Säurezahl von vorzugsweise 5-100, weiter bevorzugt 20-70 mg KOH/g. Diese Harze können in Kombination mit dem entsprechenden Härter sowohl für bei Außenanwendungen erforderliche Korrosionsstabilitäten als auch für die weniger kritischen Anwendungen im Innenbereich optimiert worden sein. Typische Harze sind Crylcoat 340 und Crylcoat 632 der Firma UCB, Belgien, www.ucb.de bzw. Uralac P2200 der Fa. DSM, Niederlande, www.dsm.com.
- hydroxylgruppenhaltige Polyester, vorzugsweise gesättigte hydroxylgruppenhaltige Polyester. Die Hydroxylzahl liegt vorzugsweise zwischen 120-15 mg KOH/g, weiter bevorzugt zwischen 50-30 mg KOH/g. Typische Harze sind Crylcoat E5169 der Firma UCB, Belgien
- sogenannte Dual-Cure Harze der Typenbezeichnung Uranox, Fa. DSM, Niederlande
- vorzugsweise pulverlacktypische Epoxidharze mit einem Epoxyäquivalentgewicht von vorzugsweise von 175 bis 6.000, weiter bevorzugt von 450 bis 4.000.
- vorzugsweise pulverlacktypische Acrylatharze und funktionalisierte Acrylatharze mit beispielsweise Hydroxyfunktionen, Carboxyfunktionen oder Epoxyfunktionen (z.B. der Fa. Mitsui Tuatzo, Japan)
- vorzugsweise pulverlacktypische strahlungshärtende Harze, wie z.B. ungesättigte Acrylate, wie Epoxy-Acrylate, Urethan-Acrylate, Polyester-Acrylate, Polyether-Acrylate und Mischungen dieser. Ein Beispiel ist UVECOAT 3001 der Fa. UCB, Belgien.
- Hochhitzefeste Bindemittel auf Basis von Silanolen wie z.B Silres-Harze von der Fa. Wacker, Deutschland.
- Funktionalisierte Harze wie z.B. Epoxidharze, Polyesterharze, bevorzugt funktionalisiert mit Phosphorsäureestern, Phosphonsäuren bzw. deren Estern, Sulfonaten, Carboxylgruppen, Aminogruppen, Hydroxylgruppen, Urethangruppen, Isocyanatgruppen, verkappten Isocyanatgruppen.

Als Härter werden vorzugsweise Verbindungen verwendet, die zu den entsprechenden reaktiven Gruppen des Harzes chemische Antipoden darstellen. Beispielsweise können dies sein:
- Verbindungen aus der Gruppe der β-Hydroxyalkylamide, wie z.B. Primid XL 552, Fa. Ems-Primid, Schweiz
- Verbindungen basierend auf Glycidylfunktionen wie Triglycidylisocyanurat (bekannt unter der Bezeichnung TGIC), wie z.B. Araldit PT 810 oder Araldit PT91 0, Fa. Huntsman, Schweiz
- Verbindungen auf Basis verkappter und freier Isocyanate wie Vestagon BF 1540, Fa. Degussa bzw. Vestagon BF 1530
- Epoxyhärter auf Basis organischer Salze wie Vestagon B31, Fa. Degussa, Deutschland.
- Härter, die einer Anregung durch Strahlung unterliegen, wie IRGACURE 2959 und IRGACURE 819 , Fa. Ciba Spezialitätenchemie, Schweiz.
- Harze, die komplementäre Gruppen zu den o.g. Harzen aufweisen.
- aminische Härter

Bei den Metallpigmenten werden vorzugsweise handelsübliche Aluminium-, Kupfer-, Messing- (Goldbronzen), Eisen-, Zink-, Titan-, Nickel- sowie Interferenzpigmente mit einem Metallkern und optional einer Metallbeschichtung verwendet.

Die Pigmente können unbeschichtet sein, können jedoch auch bereits vorbeschichtet sein, d.h. zusätzliche Schutzschichten aufweisen. Hierbei kann es sich um Barriereschichten wie SiO₂ oder um polymerisierte, hochvernetzte Polymerschichten handeln. Derart vorbeschichtete Metallpigmente weisen potenziell noch höhere Korrosionsstabilitäten auf. Beispiele hierfür sind PCR (SiO₂-Beschichtung Fa. Eckart, Fürth, Deutschland), PCA-Polymerbeschichtung (Fa. Eckart) oder PCF Polymerbeschichtung, (Fa. Toyal, Japan)

Weiterhin können farbig beschichtete Metallpigmente, z.B. mit Eisenoxid beschichtete Pigmente wie die Paliocrom^{®} Produkte (Fa. BASF AG, Ludwigshafen, Deutschland) als Ausgangspigmente bei der Herstellung der erfindungsgemäßen Pigmente verwendet werden.

Überraschenderweise lassen sich als Ausgangspigmente auch oxidierte Metalleffektpigmente, beispielsweise naßchemisch oxidierte Aluminiumpigmente, verwenden. Bei Aluminiumpigmenten läßt sich über eine naßchemische Oxidation eine Farbgebung erzeugen.

Bei Kupfer- und Messingpigmenten können durch Oxidation an Luft bei erhöhter Temperatur Metalloxidschichten erzeugt werden, die den Metallpigmenten zusätzliche attraktive Farbtöne verleihen.

Beispielsweise können attraktive gold-gelbe Pigmente durch gezielte naßchemische Oxidation von Aluminiumpigmenten unter Verwendung des in der EP 0 848 735 offenbarten Verfahrens hergestellt werden. Diese gold-gelben Pigmente werden von der Fa. Eckart GmbH & Co. KG, Fürth, Deutschland, unter der Marke Aloxal^{®} vertrieben.

Bei der naßchemischen Oxidation wird eine stark wasserhaltige Aluminiumoxid/- hydroxidschicht um den Aluminiumkern gebildet. Derartige naßchemisch oxidierte Pigmente konnten bislang in einem Pulverlack nicht verwendet werden, da bei Applikation eines naßchemisch oxidierte Aluminiumpigmente umfassenden Pulverlackes auf eine Substratoberfläche eine qualitativ hochwertige Lackierung nicht reproduzierbar erhalten werden konnte. Bei den erfindungsgemäßen Metallpigmenten ist die Oberfläche der beschichteten Pigmente der der Pulverlackbindemittelteilchen angeglichen. Eine Applikation eines erfindungsgemäße Metallpigmente, die auf naßchemisch oxidierten Aluminiumpigmenten basieren, umfassenden Pulverlacks auf einer Substratoberfläche mit reproduzierbarer Qualität ist somit problemlos möglich.

Die erfindungsgemäßen Metallpigmente können auch Interferenzpigmente sein, die einen metallischen Kern aufweisen und mit niedrig brechenden Dielektrikum- und hochbrechenden Metalloxid- oder Metallschichten belegt sind. Beispielsweise können die unter den Marken Variocrom^{®} (Fa. BASF AG) oder Chromaflair^{®} (Fa. Flex Products, Inc.) vertriebenen Pigmente verwendet werden.

Bei einer erfindungsgemäßen Weiterbildung ist ebenfalls eine Vorbeschichtung des Metallpigmentes mit einer Substanz möglich, die die Haftung zwischen Metallpigmentoberfläche und Bindemittelumhüllung verbessert. Dies können z.B. funktionalisierte Silane, funktionalisierte Polymere und phosphororganische Verbindungen sein. Diese können auch auf der zusätzlichen Beschichtung aufgebracht werden.

Vorzugsweise werden funktionalisierte Silane verwendet.

Die Silane besitzen dabei vorzugsweise die allgemeine Formel (I)

(Y)R_{(4-z)}Si(X)_{z} (I)

Bei der Silanverbindung gemäß Formel (I) ist z eine ganze Zahl von 1 bis 3, R ist eine substituierte oder unsubstituierte, unverzweigte oder verzweigte Alkylkette mit 1 bis 12 C-Atomen, Y ist eine funktionelle Gruppe, die mit entsprechenden Bindemittelfunktionalitäten reagieren kann und X steht für eine Halogen- und/oder Alkoxygruppe. R kann auch zyklisch mit Si verbunden sein, wobei in diesem Fall z üblicherweise 2 ist.

Die Silane binden nach einer Kondensationsreaktion der Si(X)-Gruppierung mit oberflächlichen OH-Gruppen der Metallpigmentoberfläche an dieser an. Die reaktive Funktion Y hingegen kann eine Anbindung an das nachträglich aufgebrachte oligomere und/oder polymere Bindemittelbewirken. Hierbei kann es sich um kovalente Bindungen oder auch um schwächere Wechselwirkungen wie Wasserstoffbrückenbindungen handeln. Entscheidend ist, daß das oligomere und/oder polymere Bindemittel mittels der als Haftvermittler fungierenden Silane so fest auf der Metallpigmentoberfläche verankert wird, das es in der Dispersion eines Lösemittels vor der Versprühung weitgehend an dem Metallpigment gebunden bleibt.

Mithin wirken die Silane als Haftvermittler zwischen der Metallpigmentoberfläche und dem oligomeren und/oder polymeren Bindemittel in der Beschichtung.

Als funktionelle Gruppen Y werden Isocyanat-, Epoxy-, Amino-, Hydroxy-, Carboxy-, Acrylat- oder Methacrylatgruppen bevorzugt. Diese Gruppen reagieren mit entsprechenden chemisch kompatiblen Gegengruppen des oligomeren/polymeren Bindemittels. Dabei härtet das Bindemittel als solches jedoch nicht aus, d.h. das oligomere/polymere Bindemittel behält seine chemische Vernetzbarkeit bzw. Härtbarkeit bei..Die funktionelle Gruppe Y des Silans kann dabei beispielsweise mit funktionellen Gruppen des oligomeren/polymeren Bindemittels reagieren, die an der Aushärtung des oligomeren/polymeren Bindemittels nicht oder nur teilweise beteiligt sind. Beispielsweise kann die funktionelle Gruppe des oligomeren/polymeren Bindemittels, bezogen auf die funktionelle Gruppe Y des Silans, in einem stöchiometrischen Überschuß vorliegen. Auf der mit wenigstens einer Silanverbindung gemäß Formel (I) vorbeschichteten Metallpigmentoberfläche sind die funktionellen Gruppen (Y) regelmäßig in einem stöchiometrischen Unterschuß, bezogen auf die entsprechende chemisch kompatible funktionelle Gegengruppe des nachträglich aufgebrachten oligomeren und/oder polymeren Bindemittels.

So kann beispielsweise Y eine Isocyanatgruppe sein, während das Bindemittel Polyesterkomponenten mit Polyol- und Polycarboxyfunktionen umfaßt. Die Isocyanatgruppen können, ggfs unter Zugabe eines Katalysators, bereits bei Raumtemperatur mit OH-Gruppen des Bindemittels abreagieren. Erst nach der Beschichtung des Metallpigmentes und der Einarbeitung in ein Lacksystem härtet dann die Polyesterbeschichtung beim Einbrennen des Lacksystems aus. Die Gruppe Y ist bevorzugt eine endständige Gruppe, da hier die höchste Reaktivität aufgrund der geringsten sterischen Hinderung gegeben ist. Es kann sich aber auch um eine weitgehend endständige Gruppe handeln, bei der noch bis zu 3 C-Atome bis zum Kettenende vor der Y-Funktion vorhanden sein können.

Die Bindemittelfunktionalitäten, die mit Y reagieren, können auch die gleichen sein, die auch bei der Aushärtung des Bindemittels das Polymer aufbauen. Dies ist möglich, da - wie bereits vorstehend ausgeführt - die mit Y reaktiven funktionellen Gruppen des oligomeren/polymeren Bindemittels regelmäßig in einem stöchiometrischen Überschuß zu der funktionellen Gruppe Y auf der Pigmentoberfläche vorliegen, so daß nach erfolgter Umsetzung der reaktiven Gruppe Y mit dem oligomeren/polymeren Bindemittel noch genügend funktionelle Gruppen an dem oligomeren und/oder polymeren Bindemittel für die Vernetzung bzw. Aushärtung verbleiben. Die mit der reaktiven Gruppe Y reaktive funktionelle Gruppe des oligomeren/polymeren Bindemittels kann auch verschieden sein von der funktionellen Gruppe bzw. den funktionellen Gruppen, die an der Aushärtung des Bindemittels beteiligt sind.

Als Oberflächenmodifizierungsmittel geeignete organofunktionelle Silane mit entsprechenden funktionellen Gruppen sind kommerziell verfügbar. Beispielsweise sind dies viele Vertreter der von der Fa. Degussa, Rheinfelden hergestellten und unter dem Handelsnamen "Dynasylan®" vertriebenen Produkte bzw. der von der Fa. OSi Specialties produzierten Silquest®-Silane oder von der Fa. Wacker produzierten GENOSIL®-Silane.

Beispiele hierfür sind 3-Methacryloxypropyltrimethoxysilan (Dynasylan MEMO, Silquest A-174NT), 3-Mercaptopropyltri(m)ethoxysilan (Dynasylan MTMO oder 3201; Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), beta-(3,4-Epoxycyclohexyl)ethyltrimethoxysilan (Silquest A-186), gamma-Isocyanatopropyltrimethoxysilan (Silquest A-Link 35, Genosil GF40), (Methacryloxymethyl)trimethoxysilan (Genosil XL 33), Isocyanatomethyl)trimethoxysilan (Genosil XL 43), Aminopropyltrimethoxysilan (Dynasylan AMMO; Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Triamino-funktionelles Trimethoxysilan (Silquest A-1130), bis-(gamma-Trimethoxysilylpropyl)amin (Silquest A-1170), N-ethylgamma-aminoisobytyltrimethoxysilan (Silquest A-Link 15), N-Phenyl-gammaaminopropyltrimethoxysilan (Silquest Y-9669), 4-Amino-3,3-dimethylbutyltrimethoxysilan (Silquest Y-11637), (N-Cyclohexylaminomethyl)triethoxyosilan (Genosil XL 926), (N-Phenylaminomethyl)trimethoxysilan (Genosil XL 973) und deren Mischungen.

Die Silane, vorzugsweise Silane gemäß Formel (I), können direkt auf der metallischen Oberfläche von Metallpigmenten aufgebracht sein. Gemäß einer bevorzugten Weiterbildung sind die Metallpigmente mit einer SiO₂-Beschichtung versehen, vorzugsweise mit einer SiO₂-Beschichtung umhüllt, wobei die Silane auf die SiO₂-Beschichtung aufgebracht sind. Auf die so vorbeschichteten Metallpigmente ist dann das oligomere und/oder polymere Bindemittel aufgebracht.

Bei einer erfindungsgemäßen Weiterbildung können auch organische oder anorganische Buntpigmente sowie Farbstoffe in der Beschichtung enthalten sein, so dass farbige Metallpigmente zugänglich sind. Hiermit können insbesondere farbige Effektpulverlacke mit hoher Korrosionsstabilität hergestellt werden:
(a) Buntpigmente
   i) organische Buntpigmente
      Bei organischen Buntpigmente kommen handelsübliche Pigmente der Klassen Monoazo-, Bisazo-, Antrachinon-, Phthalocyanin-Blau, Phthalocyanin-Grün, Perylen-, Perinonpigmente, Indigo-, Thioindigo-, Indolinon-, Isoindolinonpigmente, Chinacridon, Pyrrolopyrrolidon-, Dioxazinpigmente sowie Metallkomplexpigmente wie beispielsweise Kupferazomethin Gelb sowie weitere in Herbst/Hunger Industrielle org. Pigmente', VCH Verlagsgesellschaft mbH, Weinheim, Deutschland (1987) aufgeführte Klassen und Pigmente.
   ii) anorganische Buntpigmente
      Bei anorganischen Buntpigmenten handelt es sich um Eisenoxid-Pigmente, Bleichromat-Pigmente, Chromoxid-Pigmente, Ultramarin-Pigmente, komplexe anorganische Bunt-Pigmente, Eisenblau-Pigmente, Cadmium-Pigmente, Wismutvanadat-Pigmente, Cersulfid-Pigmente sowie handelsübliche Titandioxid- und Zinksulfid- Weißpigmente sowie weitere in 'Aktuelle anorg. Buntpigmente' Vincentz-Verlag, Hartmut Endriss aufgeführte Klassen und Pigmente.
(b) Farbstoffe
   Zum Einsatz kommen dem Anwendungsfall entsprechende migrationsstabile Farbstoffe wie z.B. mit Azoliganden komplexierte Schwermetallsalze, metallorganische Verbindungen, die mindestens eine Azo- und/oder chromophore Gruppe enthalten und in dem eingesetzten Medium löslich sind, beispielsweise Solvent Yellow 79, Solvent Red 8, Solvent Blue 45 und Solvent Black 45, erhältlich bei Fa. Clariant, Basel, Schweiz.

Bei einer erfindungsgemäßen Weiterbildung können auch Korrosionsinhibitoren in der Beschichtung enthalten sein. Diese Korrosionsinhibitoren können von anodischer oder kathodischer Wirkungsweise sein und auch in Mischungen vorliegen. Als Korrosionsinhibitoren können Korrosionsschutzpigmente eingesetzt werden. Beispiele hierfür sind Strontium-Zink-Phosphosilikat, Zink-Aluminium-Polyphosphathydrat, Zink-Calcium-Aluminium-Strontium-Phosphatsilikathydrat, Zink-Calcium-Strontium-Orthophosphatsilikathydrat, Strontium-Aluminium-Polyphosphathydrat, Calcium-Aluminium-Polyphosphatsilikathydrat und Natrium- und/oder Calcium- und/oder Zink-Molybdat und/oder Phospho-Molybdat und/oder Zinkphosphatkomplex oder Mischungen davon bestehen.

Die Korrosionsschutzpigmente weisen vorzugsweise eine mittlere Teilchengröße im Bereich von 0,1 bis 10 µm, bevorzugt von 0,15 bis 5 µm, auf.

Ein Schutz vor Korrosion kann auch durch Vorbeschichtung der Metallpigmente mit Siliziumdioxid, Metalloxid, phosphororganischen Verbindungen, vorzugsweise Phosphorsäureestern und/oder Phosphonsäureverbindungen, und/oder Polymeren vorbeschichtet sind, bewirkt oder verbessert werden.

Bei einer weiteren erfindungsgemäßen Weiterbildung können auch weitere in Lacken und Pulverlacken übliche Zusätze in der Beschichtung enthalten sein, so dass die erfindungsgemäßen Metallpigmente maßgeschneiderte Anwendungseigenschaften im Anwendungsmedium besitzen.

Vorzugsweise werden die Zusätze aus der Gruppe ausgewählt, die Additive, Füllstoffe, Entgasungsmittel, filmbildende Hilfsmittel, Flammschutzmittel, Haftvermittler, Korrosionsinhibitoren, Lichtschutzmittel, Mattierungsmittel, Photoinitinitiatoren, Polymerisationsinhibitoren, Polymerisationsinitiatoren, Radikalfänger, Rieselhilfen, Slipmittel, strahlungshärtende Reaktivverdünner, thermisch vernetzbare Reaktiwerdünner, UV-Absorber, Verlaufmittel, Vernetzungskatalysatoren, Wachse und Mischungen davon umfaßt.

Die erfindungsgemäßen Metallpigmente können in Beschichtungszusammensetzungen, einem Masterbatch oder einem Pulverlack auch zusammen mit weiteren Pigmenten verwendet werden. Gemäß einer bevorzugten Ausführungsform können die erfindungsgemäßen Metallpigmente zusammen mit Perlglanzpigmenten verwendet werden. Perlglanzpigmente können nicht korrodieren und eignen sich mithin für Beschichtungen, die korrodierenden Bedingungen bspw. der natürlichen Bewitterung ausgesetzt sind. Somit eignen sich Gemische aus erfindungsgemäßen Metallpigmenten und Perlglanzpigmenten in Pulverlacksystemen, die zur Pulverlack-Beschichtung von beispielsweise Fassadenelementen, Karosserien, Fahrzeugrahmen etc. verwendet werden.

Der Gehalt an Bindemittel bei den erfindungsgemäßen Metallpigmenten beträgt vorzugsweise 20 bis 85 Gew.-%, bevorzugt 52 bis 75 Gew.-% und weiter bevorzugt 55 bis 60 Gew.-%, jeweils bezogen auf das Gesamtgewicht des beschichteten Metallpigmentes.

Die Bindemittel polymerisieren vorzugsweise nicht bzw. nicht wesentlich bei der Beschichtung bzw. nach der Beschichtung der Metallpigmente. Eine Polymerisation der die Metallpigmente umhüllenden Bindemittel findet vorzugsweise erst beim Einbrennen des fertigen Lackes nach der Applikation der erfindungsgemäßen Metallpigmente in dem Anwendungsmedium statt. In diesem Fall erfolgt die Polymerisation thermisch.

Es kann jedoch auch, bei radikalisch polymerisierenden Bindemitteln, eine Aushärtung mittels UV- oder IR-Strahlung erfolgen. Hierbei kann sowohl das Bindemittel des Lackes als auch das Bindemittel der Beschichtung polymerisieren. Dabei erfolgt vorzugsweise eine Vernetzung des Bindemittels des Lackes mit dem Bindemittel des Beschichtung des erfindungsgemäßen Metallpigmentes.

Ein großer Vorteil der erfindungsgemäßen Metallpigmente besteht u.a. in der viel besseren Anbindung der Metallpigmente an das Bindemittel eines Lackes. Dies ist insbesondere dann gegeben, wenn das gleiche Bindemittel als Beschichtung wie auch als Applikationsmedium verwendet wird.

Metallpigmente stellen aufgrund ihrer plättchenförmigen Struktur immer eine Störung der Lackierung dar und bewirken daher eine verringerte mechanische Stabilität der Lackierung bzw. des Lackfilmes. Die erfindungsgemäßen Metallpigmente können jedoch nahezu perfekt in die aushärtende Beschichtung eingepaßt werden, und daher sind erhöhte mechanische und chemische Stabilitäten der Beschichtung die Folge.

So ist insbesondere bei ausgehärteten Pulverlacken, die die erfindungsgemäßen Metallpigmente enthalten, eine erheblich gesteigerte Abrasionsbeständigkeit festzustellen, verglichen mit herkömmlichen Pulverlackbeschichtungen. Überraschenderweise weisen ausgehärtete erfindungsgemäße Pulverlacke einen neuen attraktiven Effekt auf. Eine mit dem erfindungsgemäßen Pulverlack beschichtete Substratoberfläche erzeugt bei einem Betrachter einen metallischen Eindruck mit räumlicher Tiefe. Es wird vermutet, daß diese vorteilhaften Eigenschaften auf eine gute Einbindung der Metallpigmente in der Pulverlackbeschichtung zurückzuführen sind. Die erfindungsgemäßen Metallpigmente weisen keinen oder nur einen vernachlässigbaren Anteil an Metallpigmenten mit Leafing-Verhalten auf.

Überraschenderweise wurde gefunden, daß die erfindungsgemäß mit Bindemittel umhüllten Pigmente auch als Masterbatch im Pulverlack verwendet werden können. Im Fall eines Masterbatches beträgt der Gehalt an Bindemittel vorzugsweise 50 bis 85 Gew.-%, bevorzugt 55 bis 80 Gew.-% und weiter bevorzugt 60 bis 75 Gew.-%.

Masterbatche werden üblicherweise in Kunststoffen verwendet. Hier ist ein Masterbatch ein hoch pigmentierter Kunststoff, der dem Kunststoffmedium im Extruder zugegeben wird.

Im Pulverlack stellt ein nach dem herkömmlichen Bonding-Verfahren hergestelltes Metallpigment eine Art Vorform eines Masterbatches dar. Bei Metallpigmenten sind jedoch lediglich Pigmentierungshöhen von ca. maximal 8 % erreichbar.

Mit den erfindungsgemäß beschichteten Metallpigmenten können wesentlich höhere Konzentrationen an Metallpigment erreicht werden, so daß man hier wirklich von einem Masterbatch sprechen kann. Dies gilt insbesondere für den Fall, das das Metallpigment mit dem gleichen Bindemittelsystem beschichtet wird, in das es später - beispielsweise in einem Pulverlack - auch eingearbeitet und verarbeitet wird.

Bei der vorliegenden Erfindung ist äußerst vorteilhaft möglich, einen Masterbatch oder eine Beschichtungszusammensetzung mit einem Metallgehalt von vorzugsweise 0,5 bis 15 Gew.-%, weiter vorzugsweise von 1 bis 12 Gew.-%, weiter bevorzugt von 2 bis 8 Gew.-%, jeweils bezogen auf das Gesamtgewicht des Masterbatches oder der Beschichtungszusammensetzung, bereitzustellen.

Die bei der vorliegenden Erfindung mögliche hohe Pigmentierung von Masterbatch und Beschichtungszusammensetzung eröffnet völlig neue Möglichkeiten. Beispielsweise ist die Verwendung von hochpigmentierten bzw. hochkonzentrierten Masterbatchen beispielsweise beim Transport ein großer Vorteil. Aufgrund der höheren Konzentration des Masterbatches müssen - bei gleicher Endkonzentration beispielsweise in einem Pulverlack - geringere Mengen verwendet und mithin transportiert werden.

In einer Beschichtungszusammensetzung ermöglicht die höhere Konzentration von Metallpigmenten eine erhöhte Deckung eines zu beschichtenden Substrats mit Metallpigmenten, die mit herkömmlichen Pulverlacksystemen nicht möglich sind.

Die der Erfindung zugrundeliegende Aufgabe wird des weiteren durch Bereitstellung eines Verfahrens zur Herstellung eines Metallpigmentes nach einem der Ansprüche 1 bis 26, umfassend die Schritte:
a) Herstellen einer Lösung oder Dispersion eines oligomeren und/oder polymeren Bindemittels in einem organischen Lösemittel,
b) Beschichten des Metallpigmentes mit dem Bindemittel durch
   i) Dispergieren des Metallpigmentes in der Lösung oder Dispersion von a) und anschließendem Versprühen,
      oder
   ii) Versprühen der Lösung oder Dispersion von a) auf in einem Gasstrom verwirbelte Metallpigmente,
c) Trocknen der mit Bindemittel beschichteten Metallpigmente in einem bewegten Gasstrom,
gelöst.

Selbstverständlich können die Metallpigmente auch zuerst in einem organischen Lösungsmittel dispergiert und nachfolgend das oligomere und/oder polymere Bindemittel in gelöster oder ungelöster Form zugegeben werden, so daß eine Dispersion aus Metallpigmenten und Bindemittel oder Bindemittellösung entsteht, die nachfolgend im Schritt b)i) versprüht wird.

Bevorzugte Weiterbildungen des erfindungsgemäßen Verfahrens sind in den Unteransprüchen angegeben. Die in bezug auf die erfindungsgemäßen Metallpigmente bzw. Beschichtungszusammensetzung gemachten Ausführungen gelten entsprechend bei der Erläuterung des erfindungsgemäßen Verfahrens.

Die Metallpigmente sind im organischen Lösemittel unlöslich und bilden mit dem Lösemittel bzw. in im Lösemittel gelösten Verbindungen eine Dispersion. Die Bindemittel und ggfs. weiter verwendeten Zusatz- und/oder Hilfsstoffe, beispielsweise Härter, sind im vorzugsweise im organischen Lösemittel löslich, können im Fall einer Unlöslichkeit jedoch auch als Dispersion vorliegen.

Vorzugsweise werden den in Lösemittel gelöstem oder dispergiertem oligomerem und/oder polymerem Bindemittel, vor dem Inkontaktbringen mit den Metallpigmenten, weitere Zusatz- und/oder Hilfsstoffe zugesetzt.

Die vorzugsweise zu verwendenden Zusatz- und/oder Hilfsstoffe sind weiter oben bereits angegeben worden. Bei Einarbeitung der Zusatz- und/oder Hilfsstoffe in eine Lösung oder Dispersion aus polymeren oder oligomeren Bindemitteln wird vorteilhaft eine gleichmäßige Verteilung der Zusatz- und/oder Hilfsstoffe in der auf den Metallpigmenten aufgebrachten Beschichtung erhalten.

Die Zusatz- und/oder Hilfsstoffe können beispielsweise Härter, Photoinitiatoren und/oder Polymerisationsinitiatoren umfassen. Des weiteren können die Zusatz- und/oder Hilfsstoffe Korrosionsinhibitoren, vorzugsweise Korrosionsschutzpigmente, umfassen. Die Zusatz- und/oder Hilfsstoffe sind bereits oben im Detail aufgeführt worden.

Als Lösemittel können Wasser, organische Lösemittel oder Wasserhaltige organische Lösemittel verwendet werden. Vorzugsweise werden organische Lösemittel mit einem Wassergehalt von vorzugsweise weniger als 2 Gew.-%, weiter bevorzugt von weniger als 1 Gew.-%, noch weiter bevorzugt von weniger als 0,5 Gew.-%, Wasser verwendet. Die Angabe Gew.-% bezieht sich hierbei auf das Gesamtgewicht des verwendeten Lösemittels.

Bei einer weiteren bevorzugten Ausgestaltung des erfindungsgemäßen Verfahrens können bei der Beschichtung der Metallpigmente pigmentaffine Bindemittel verwendet werden. Unter pigmentaffinen Bindemitteln werden Bindemittel verstanden, die haftvermittelnde Gruppen enthalten und schon in der Pigment-Bindemittel-Dispersion an das Metallpigment binden. Dies sind zum Beispiel Epoxidharze, Epoxidharz-modifizierte Phosphorsäureester, wie z.B. Resydrol VAX 5538w/50 WA von UCB Surface Specialities, carboxyfunktionalisierte Harze, phosphonat-, phosphonsäureester- oder sulfonatfunktionalisierte Harze. Derartige Harze binden bereits in der Dispersion in einem Lösemittel an die Metallpigmentoberfläche.

Bei Verwendung von Silanisierungsmitteln, beispielsweise der oben genannten Silanisierungsmittel, werden diese vorzugsweise in dem gleichen organischen Lösemittel auf die Metallpigmentoberfläche aufgebracht, das auch zur Herstellung der Lösung oder Dispersion des oligomeren und/oder polymeren Bindemittels verwendet wird. Die Silanisierung der Metallpigmente kann bei erhöhter Temperatur unter Rühren oder Schütteln sowie optional unter Zugabe von Wasser und/oder eines Katalysators durchgeführt werden. Als Katalysator werden vorzugsweise leichtflüchtige organische Basen wie z.B. Ammoniak, leichtflüchtige Amine, etc. verwendet.

Bei dem nachfolgenden Versprühen der Metallpigmentdispersion wird eine bessere Beschichtungsqualität mit weniger kugelförmigen Nebenfällungen des Bindemittels erhalten. Es wird vermutet, dass zudem eine weitgehende Vorbeschichtung der Metallpigmente mit Bindemittel vor dem Versprühen außerdem eine bessere Beschichtung mit dem restlichen, noch nicht gebundenen Bindemittel auf dem Metallpigment bewirkt. Die bereits in der Dispersion erfolgt Vorbeschichtung durch die pigmentaffinen Bindemittel könnte eine Art Keimbildung bewirken, die die weitere gleichmäßige Beschichtung während des Versprühens der Dispersion begünstigt..

Das Entfernen des Lösemittels bzw. das Trocknen der beschichteten Metallpigmente erfolgt vorzugsweise unter gleichzeitiger oder nachfolgender Verwirbelung der beschichteten Metallpigmente.

Die Verwirbelung der beschichteten Metallpigmente verhindert zuverlässig eine Aggregation oder Agglomeration der Metallpigmente. Da die Metallpigmente in einer aufgebrachten Lackierung gleichsam als eine Vielzahl kleiner Spiegelelemente wirken, sollte eine Agglomeration der Metallpigmente vermieden werden, um eine Beeinträchtigung des optischen Erscheinungsbildes der Beschichtung zu vermeiden.

Vorzugsweise werden die Schritte (bi) und (c) in einer ersten Verfahrensvariante zusammengefasst, in der das Versprühen der beschichteten Metallpigmente und das Entfernen des Lösemittels durch Sprühtrocknen erfolgt.

Vorzugsweise beträgt die Restfeuchte der getrockneten erfindungsgemäßen Metallpigmente weniger als 4 Gew.-%, weiter bevorzugt weniger als 2 Gew.-%, noch weiter bevorzugt weniger als 1,2 Gew.-%, jeweils bezogen auf das Gesamtgewicht des erfindungsgemäßen Metallpigmentes. Bei höheren Restfeuchtgehalten können die Oberflächen der beschichteten Pigmente klebrig sein, was nachteiligerweise zu unerwünschten Agglomeraten und/oder Aggregaten führt.

Die Sprühtrocknung ist ein besonders kostengünstiges Trocknungsverfahren, welches gleichzeitig hohe Durchsätze gewährleistet. Bei der Sprühtrocknung ist sowohl ein Batch-Betrieb als auch ein kontinuierlicher Betrieb möglich. Bevorzugt werden Sprühtrocknungsverfahren zur Herstellung der erfindungsgemäßen Matallpigmente verwendet.

Bei der Sprühtrocknung wird die Dispersion unter geeignetem Sprühdruck in einen umschlossenen Anlagenraum verdüst bzw. zerstäubt. Der Sprühdruck wird in Abhängigkeit von den äußeren Bedingungen wie Feststoffgehalt, Viskosität der zu versprühenden Dispersion, Temperatur im Reaktor, Art des Lösemittels, etc. eingestellt und kann vom Fachmann ohne weiteres ermittelt werden. Vorzugsweise findet die Verdüsung in einen Gasstrom, beispielsweise Luft oder Stickstoff, statt. Die sich bildenden Tröpfchen führen aufgrund der starken Oberflächenvergrößerung zu einer starken Verdunstung des Lösemittels, was noch durch eine erhöhte Temperatur der Förderluft verbessert werden kann. Die Temperatur wird dabei so gewählt, daß keine wesentliche Polymerisation bzw. Aushärtung der reaktiven Beschichtung auf den Metallpigmenten erfolgt.

Bei der Sprühtrocknung kann die Zerstäubung durch Zentrifugalzerstäuber, wie Zerstäuberscheiben bzw. Zerstäuberräder, durch Druckdüsen, Zweistoffdüsen oder Dralldüsen erfolgen. Der Gasstrom kann entweder im Gleichstrom oder im Gegenstrombetrieb die Anlage durchlaufen. Bei einer Sprühtrocknung im Mischstrom sind die Düsen im unteren Teil des Trockenturmes angebracht. Die Versprühung erfolgt hierbei springbrunnenartig nach oben. Die Abscheidung des Produktes aus dem Gasstrom erfolgt unter dem Sprühturm, durch einen Zyklon und einen Filter. Des weiteren kann zur Trocknung der zu versprühenden Suspension ein Kombinationsverfahren, der sog. fluidisierte Sprühtrockner eingesetzt werden. Dieses Verfahren vereinigt die Vorteile der Sprühtrocknung feiner Tröpfchen mit der Wirbelbetttrocknung. Es können selbstverständlich auch andere Sprühtrocknungsverfahren verwendet werden.

Gemäß einer weiteren bevorzugten Ausführungsform werden die Schritte (bii) und (c) zusammengefasst, indem das Beschichten und Trocknen der Metallpigmente in einem Fluidbett oder einer Wirbelschicht erfolgt, wobei die im Lösemittel gelösten oder dispergierten oligomeren und/oder polymeren Bindemittel eingesprüht werden und das Lösemittel während der Verwirbelung in dem Fluidbett oder der Wirbelschicht entfernt wird.

Diese Verfahrensvariante entspricht der einer Fluidbettbeschichtung. Dabei wird das Pigment wird in einer geschlossenen Sprühtrocknungsapparatur vorgelegt und du rch Einblasen von Druckluft oder unter Druck stehendem Stickstoff fluidisiert. Die Druckluftmenge bzw. Druckstickstoffmenge wird dabei so gewählt, daß eine ruhige und nicht turbulente Oberfläche entsteht. Die Bindemittel-Lösung bzw. -Dispersion wird dann durch eine Düse gefördert und in das bewegte Fluidbett gesprüht. Das Lösemittel kann dann wie bei der ersten Verfahrensvariante, beispielsweise durch Wärmebeaufschlagung, entfernt und das erfindungsgemäße Metallpigment getrocknet werden.

Die Pigment/Bindemittel/Lösemittel-Dispersionen für die Sprühtrocknung bzw. die Bindemittel-Lösung bzw. -Dispersion für die Fluidbettbeschichtung können bspw. mit folgenden organischen Lösemitteln hergestellt werden: Alkohole, Ether, Ester, Ketone sowie aliphatische und aromatische Kohlenwasserstoffe mit einem Siedepunkt von unter 130 °C. Besonders bevorzugt sind Aceton und Ethylacetat. Es können aber Mischungen der vorgenannten organischen Lösemittel verwendet werden. Wasser bzw. Wasser-Lösemittelgemische können ebenfalls verwendet werden.

Die Dispersion ist vorzugsweise flüssig genug, um problemlos durch eine Düse versprühbar zu sein. Der Lösemittelgehalt der Dispersion beträgt vorzugsweise 50 bis 97 Gew.-%, bevorzugt 50 bis 85 Gew.-% und weiter bevorzugt 50 bis 75 Gew.-%, jeweils bezogen auf das Gesamtgewicht der Dispersion.

Der Druck mit dem die Druckluft bzw. der Stickstoff in die Apparatur eingelassen wird, beträgt vorzugsweise 1 bis 5 bar, weiter bevorzugt 2-4 bar.

Die Temperatur zur Abdunstung des Lösemittels hängt wesentlich von der Natur des Lösemittels ab. Bevorzugt sind Temperaturen von 0 bis 130 °C, besonders bevorzugt 20 bis 80 °C.

Vorzugsweise wird die Temperatur so gewählt, dass das Lösemittel gut verdampft und die Bindemittelbeschichtung nicht wesentlich polymerisiert, vorzugsweise nicht polymerisiert. Ein leichtes Anpolymerisieren des Bindemittels ist jedoch nicht ausgeschlossen und auch unerheblich, solange noch eine spätere ausreichende Reaktionsfähigkeit des Bindemittels gegeben ist.

Das nach beiden Verfahrensvarianten hergestellte erfindungsgemäße Metallpigment ist ein staubarmes, rieselfähiges Pulver mit einer Korngröße von d₅₀ kleiner 190 µm, bevorzugt kleiner 100 µm. Vorzugsweise beträgt die Korngröße von d₅₀ wenigstens 5 µm. Es handelt sich mithin nicht um ein Granulat. Granulate haben eine Größe, die üblicherweise im Bereich von Millimetern liegt.

Das erfindungsgemäße Metallpigment kann nach dem Herstellungsprozeß gesichtet und/oder gesiebt werden, um eine definierte Korngrößenverteilung des Produktes zu gewährleisten.

Das erfindungsgemäße Metallpigmentpulver kann mit einer geeigneten Flüssigphase, vorzugsweise einem Lösemittel, versetzt werden, um es in Form einer Paste bereitstellen zu können. Dabei beträgt der Pigmentanteil der Paste vorzugsweise 30 bis 80 Gew.-%, bezogen auf das Gesamtgewicht der Paste.

Als Lösemittel zum Anpasten werden vorzugsweise Wasser oder organische Lösemittel wie aliphatische Kohlenwasserstoffe ("Testbenzin"), aromatische Kohlenwasserstoffe (Solvent Naphta), Alkohole, Ester, Ketone, Aldehyde, Ether oder Mischungen davon verwendet.

Hierbei sollten jedoch stets Lösemittel verwendet werden, die nicht das Bindemittel vom Metallpigment wieder ablösen. Vorzugsweise werden aliphatische und/oder aromatische Kohlenwasserstoffe verwendet.

Das erfindungsgemäß beschichtete Metallpigment wird vorzugsweise bei der Herstellung von Farben, Lacken, Pulverlacken, Druckfarben, Kunststoffen und Kosmetika verwendet.

Die folgenden Beispiele und Figuren erläutern die Erfindung, ohne sie zu beschränken.

**Beispiel 1:** Es wurden 125 g eines gesättigten Polyesters mit der Säurezahl 70 (Crylcoat 340 (Fa. UCB, Belgien) sowie 125 g eines Epoxyharzes mit einem Epoxyäquivalentgewicht von 750 (Araldit GT 6063 ES, Fa. Vantico, Schweiz) in 1800 g Aceton gelöst und 250 g Standart Spezial PCR 501 (d₅₀ = 20 µm) (erhältlich bei Fa. Eckart, Fürth, Deutschland) eingerührt. 2300 g der Dispersion wurden in einem Sprühtrockner bei einer Rate von 30 g/min und einem Spritzdruck von 2,5 bar in einem 55 °C warmen Luftstrom versprüht. Nach Trocknung wurde eine Ausbeute von 483 g Pigment erhalten.

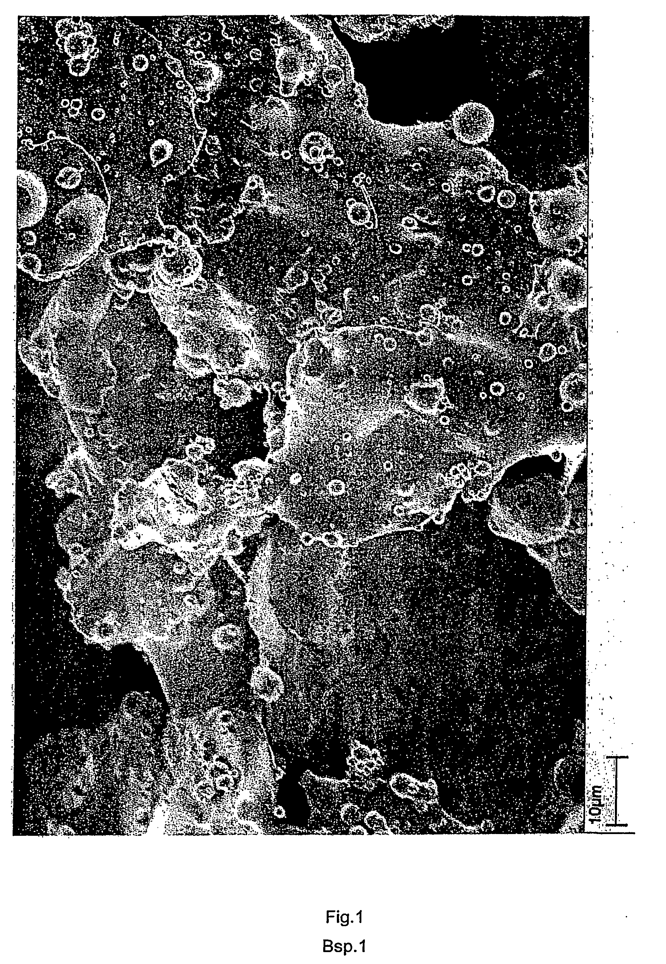

In Fig. 1 ist eine rasterelektronenmikroskopische Aufnahme des gemäß dem erfindungsgemäßen Beispiel 1 beschichteten Metallpigmentes abgebildet.

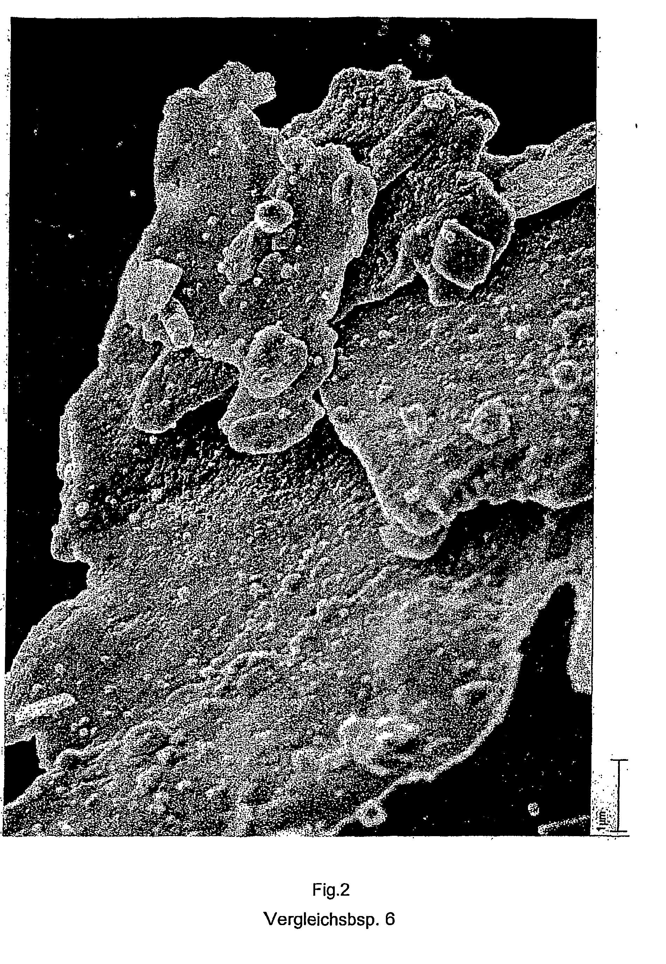

In Fig. 2 ist das Ausgangspigment (Vergleichsbeispiel 6) gezeigt.

Der Vergleich dieser beiden Figuren zeigt, daß das erfindungsgemäße Metallpigment von der Bindemittelbeschichtung vollständig umhüllt sind.

**Beispiel 2:** Es wurden 125 g eines gesättigten Polyesters mit der Säurezahl 70 (Crylcoat 340, Fa. UCB, Belgien) sowie 125 g eines Epoxyharzes mit einem Epoxyäquivalentgewicht von 750 (Araldit GT 6063 ES, Fa. Vantico, Schweiz) in 1800 g Aceton gelöst und 300 g Dorolan Reichbleichgold 10/0 (Fa. Eckart) eingerührt. 2300 g der Dispersion wurden in einem Sprühtrockner bei einer Rate von 30 g/min und einem Spritzdruck von 2,5 bar in einem 55 °C warmen Luftstrom versprüht. Nach Trocknung wurde eine Ausbeute von 537 g Pigment erhalten.

**Beispiel 3:** Es wurden 125 g eines gesättigten Polyesters mit der Säurezahl 70 (z.B. Crylcoat 340, Fa. UCB, Belgien) sowie 125 g eines Epoxyharzes mit einem Epoxyäquivalentgewicht von 750 (z. B. Araldit GT 6063 ES, Fa. Vantico, Schweiz) in 1800 g. Aceton gelöst und 50 g Standart Spezial PCR 501 eingerührt. 2100 g der Dispersion wurden in einem Sprühtrockner bei einer Rate von 30 g/min und einem Spritzdruck von 2,5 bar in einem 55 °C warmen Luftstrom versprüht. Nach Trocknung wurde eine Ausbeute von 288 g Pigment erhalten.

**Beispiel 4:** Wie Beispiel 1, jedoch wurde als Aluminiumpigment Standart 212 (d₅₀ = 50 µm; Fa. Eckart) eingesetzt. Dieses Pigment war zuvor nicht beschichtet.

**Vergleichsbeispiel 5:** Kommerziell erhältliches STANDART Aluminiumpulver Spezial PCR 501 (Fa Eckart).

**Vergleichsbeispiel 6:** Kommerziell erhältliches STANDART Goldbronzepulver Dorolan Reichbleichgold 10/0 (Fa Eckart).

**Vergleichsbeispiel 7:** Kommerziell erhältliches STANDART PCA 501 (d₅₀ = 20 µm) (Fa. Eckart).

**Vergleichsbeispiel 8:** Kommerziell erhältliches PCF 7130 (d₅₀ = 20 µm; Fa. Toyal, Japan). Hier handelt es sich um ein Aluminiumpigment mit einer dreidimensional vernetzten Polymerschicht (polymerisiert aus Monomeren).

**Vergleichsbeispiel 9:** Kommerziell erhältliches Standart Aluminiumpigment 212 (in getrockneter Form der STAPA^{®} Metallux 212; d₅₀ = 50 µm) (Fa. Eckart).

Beispiel 10: Beschichtung wie Beispiel 1, jedoch wurde kommerziell erhältliches Aloxal 3010 (d₅₀= 18 µm, Fa. Eckart) als Ausgangsmaterial eingesetzt.

**Vergleichsbeispiel 11:** Kommerziell erhältliches Aloxal 3010 (d₅₀= 18 µm, Fa. Eckart), welches ausgetrocknet, jedoch nicht weiter beschichtet wurde. Hier zeigten die weiter unten beschriebenen Applikationen ein ungleichmäßiges Spritzbild.

Die besseren Stabilitäten der erfindungsgemäß beschichteten Metallpigmente zeigten sich in der Applikation (Einschichtlackierung, d.h. ohne Klarlackierung) in folgenden Abprüfungen:
- Prüfung der Beständigkeit gegen verschiedene Säuren und Laugen
- Kondenswasser-Konstantklima (gemäß DIN 50017)
- Mörteltest nach Vorschriften der GSB (Gütegemeinschaft für die Stückbeschichtung von Bauteilen e.V., Schwäbisch-Gmünd, D-73525, Deutschland)

Bei einer Prüfung der Beständigkeit gegen verschiedene Säuren und Laugen wurden Prüfbleche, die mit den Pulverlacken der verschiedenen erfindungsgemäßen Beispiele bzw. Vergleichsbeispiele, wie weiter unten beschrieben, beschichtet waren, mit Salzsäure und Schwefelsäure verschiedener Konzentrationen sowie mit Natronlauge betropft. Die Tropfen wirkten 5 Minuten bis drei Stunden auf das jeweilige Blech ein. Nach Abwaschen der Säuren bzw. Laugen wurde jeder Tropfenbereich auf den Vergrauungsgrad gemäß den nachstehenden Kriterien beurteilt:
0 Punkte = kein Angriff
1 Punkt = kaum sichtbarer Angriff
2 Punkte = deutlich sichtbarer Angriff
3 Punkte = vollständige Vergrauung

Aus insgesamt 14 Tropfenbereichen wurde eine Gesamtbewertung mit 0-42 Punkten errechnet.

Der Mörteltest nach den Güte- und Prüfbestimmungen der GSB (Gütegemeinschaft für die Stückbeschichtung von Bauteilen e.V.) wurde an Probeblechen mit pigmentierten Fassadenbeschichtungen (Pulverlack) angewendet. Hierbei wurde eine definierte Menge eines Kalkmörtels nach den Vorschriften der AAMA 603-7-1976 bzw. AAMA 2604-98 (AAMA: American Architectural Manufactures Association) auf ein Probeblech aufgetragen. Anschließend wurde das Probeblech sofort für 24 Stunden einer relativen Luftfeuchte von 100% bei 40°C ausgesetzt.

Um diesen Test zu bestehen, muß der Mörtel nach 24 Stunden leicht von der beschichteten Oberfläche abzuheben und eventuelle Reste mit einem feuchten Tuch leicht entfernbar sein. Ferner darf sich kein Haftungsverlust des Pulverlackfilms zeigen und keine sichtbare Veränderung im Erscheinungsbild der Oberfläche bei der

Prüfung mit bloßem Auge ergeben. Dieser Test ist ein äußerst harter Chemikalientest, da im feuchten Mörtel pH-Werte von 11-12 vorliegen. Bei aluminiumpigmentierten Einschichtlackierungen tritt in der Regel eine starke, unansehnliche Vergrauung der belasteten Oberfläche auf, es ist jedoch ein zumindest annähernd unversehrtes metallisches Erscheinungsbild der Lackierung gefordert. Insbesondere für Aluminiumpigmente stellt dieser Test hohe Anforderungen, die bislang mit am Markt befindlichen Systemen noch nicht erreicht wurden.

Die Beurteilung des Mörteltests erfolgt visuell, die Bewertung des Vergrauungsgrades der bewitterten Zone erfolgt in den Beispielen nach dem System der DIN 53230 in den Kennzahlen von 0 bis 5. Der Vergleichsstandard ist die unbewitterte Blechzone bzw. ein unbewittertes Blech.

| **Kennzahl** | Bedeutung |
|---|---|
| 0 | keine Veränderungen |
| 1 | Spuren der Vergrauung |
| 2 | geringe Vergrauung |
| 3 | mittlere Vergrauung (Metallflakes sind noch erkennbar) |
| 4 | starke Vergrauung (Metallflakes kaum noch erkennbar) |
| 5 | sehr starke Vergrauung |

Für die Belastungstests wurden Pulverlackapplikationen in einem kommerziell erhältlichen Polyester-Primidsystem (erhältlich bei Fa. DuPont, Essenbach, Deutschland) durchgeführt. Die Pigmentierungshöhen der erfindungsgemäßen Beispiele betrugen 5 bzw. 10 Gew.-% beschichtetes Metallpigment und folglich 2,5 bzw. 5 Gew.-% bezogen auf den Aluminiumanteil. Die Vergleichsbeispiele wurden zu lediglich 1 % Gew.-% pigmentiert. Derart niedrige Pigmentierungshöhen führen in der Regel zu besseren Ergebnissen in Belastungstests, da in diesem Fall die Metallpigmente besser durch das Bindemittel der Beschichtung geschützt sind.

**Tabelle 1:**

| **Ergebnisse der Beständigkeitsprüfungen** | | | |
|---|---|---|---|
| **Probe** | **Chemikalientest Punkte** | **Kondenswasser-Konstantklima (DIN 50017)** | **Mörteltest nach Vorschriften der GSB** |
| Beispiel 1 | 0 | > 1.000 h | 1 |
| Beispiel 2 | 3 | > 1.000 h | 1 |
| Beispiel 3 | 0 | > 1.000 h | 1 |
| Beispiel 4 | 4 | > 1.000 h | 2-3 |
| Vergl.-bsp. 6 | 24 | 72 h | 5 |
| Vergl.-bsp. 7 | 31 | 500 h | 4 |
| Vergl.-bsp. 8 | 15 | 108 h | 4 |
| Vergl.-bsp. 9 | 3 | > 1.000 h | 3 |
| Beispiel 10 | 0 | > 1.000 h | 1 |
| Vergl.-bsp. 11 | 3 | > 1.000 h | 4 |

Das Ergebnis zeigt, dass Applikationen mit erfindungsgemäß beschichteten Pigmenten im Chemikalientest eine deutlich geringere Schädigung durch Säuren und Laugen erleiden, als Applikationen mit herkömmlichen Pigmenten.

Analog zeigen Applikationen mit erfindungsgemäß beschichteten Pigmenten im Kondenswasser-Konstantklima erheblich größere Standzeiten als Applikationen mit herkömmlichen Metallpigmenten.

Beim Mörteltest sind bei allen bislang getesteten herkömmlichen Aluminiumpigmenten die sichtbaren Veränderungen im Erscheinungsbild der Oberfläche beträchtlich. Es entsteht ein vergrauter Fleck mit den Ausdehnungen des Mörtelauftrags. Dies gilt auch für das Vergleichsbeispiel 9, das in den anderen Belastungstests sehr gut abschnitt.

Bei den erfindungsgemäß beschichteten Metallpigmenten der Beispiele 1 bis 3 sind Veränderungen der Oberfläche praktisch nicht zu erkennen. Somit bestehen die erfindungsgemäß beschichteten Aluminiumpigmente diesen Test und erfüllen damit eine wichtige Voraussetzung zum Einsatz in Pulverlacken für Fassadensysteme, wie beispielsweise Fassadenplatten.

Die vorteilhafte Recyclierbarkeit der erfindungsgemäß beschichteten Metallpigmente in Pulverlackanwendungen zeigt sich bei einem dreifachen Durchlauf durch einen Zyklon. Während die Applikation herkömmlicher Metallpigmente (Vergleichsbeispiel 6) nach der Zyklonierung erhebliche Farbverschiebungen durch die teilweise Entmischung von Metallpigment und Pulverlack zeigt, sind bei den erfindungsgemäß beschichteten Metallpigmenten keine Veränderungen in der Applikation festzustellen.

Die ausgehärteten Pulverlacke, die erfindungsgemäße Metallpigmente enthalten, erzeugen bei einem Betrachter neben dem metallischen Glanz den Eindruck einer ungewöhnlichen räumlichen Tiefe. Darüber hinaus sind die ausgehärteten erfindungsgemäßen Pulverlacke äußerst abriebfest. Die Abriebfestigkeit kann beispielsweise durch den sogenannten "Tesa-Test" bestätigt werden, bei dem ein Klebestreifen auf eine lackierte Substratoberfläche geklebt und nachfolgend wieder abgezogen wird. Bei einem ausgehärteten erfindungsgemäßen Pulverlack kommt es zu keinen Lackablösungen.

Ein weiterer Vorteil der erfindungsgemäß beschichteten Metallpigmente zeigt sich in der verbesserten Verarbeitung während der Pulverbeschichtung. Bei sehr unterschiedlichem elektrostatischem Aufladeverhalten von Metallpigment und Pulverlackbindemittel kommt es zu einer Agglomeratbildung in der Spritzpistole. Diese führt zur Entstehung von Pigmentklumpen in der Spritzapplikation. Beurteilt man diese Klumpenbildung visuell in einem Notensystem nach DIN 53 230, so ergeben sich folgende Benotungen:
Note 0: keine Klumpenbildung
Note 1: erste visuell wahrnehmbare Klumpenbildung
Note 2: schwache Klumpenbildung
Note 3: mittlere Klumpenbildung
Note 4: starke Klumpenbildung
Note 5: sehr starke Klumpenbildung

Im Vergleich wurde ein sehr großes Aluminiumpigment getestet, welches i.d.R. schwer zu bonden ist. Das unbeschichtete Aluminiumpigment des Vergleichsbeispiels 9 wurde in Form eines dry-blends und eines gebondeten Pulverlacks appliziert. Das erfindungsgemäße Beispiel 4 hingegen wurde in Form eines einfachen dry-blends appliziert.

### Ergebnisse:

Beispiel 4: 0-1
Vergleichsbeispiel 9 als dry-blend: 3
Vergleichsbeispiel 9 gebondet: 1 - 2

Das erfindungsgemäß beschichtete Aluminiumpigment läßt sich demnach selbst in einer einfachen dry-blend Verarbeitung erheblich besser applizieren als gebondetes Aluminiumpigment, welches nicht zuvor mit Bindemitteln gemäß dieser Erfindung beschichtet wurde.

Zu Anwendung in Naßlacksystemen wurden unter identischen Bedingungen Gasungstests in dem kommerziell erhältlichen Wasserlacksystem Mischlacksilber (BASF, Würzburg) durchgeführt, wobei jeweils die entstehende Menge an Wasserstoff gemessen wird. Der Test gilt als bestanden bei einer Gasentwicklung von weniger als 22 ml Wasserstoff nach 30 Tagen.

| | |
|---|---|
| Beispiel 1: | 12 ml nach 30 Tagen |
| Vergleichsbeispiel 6: | > 19 ml nach 2 Tagen |

Der Test wurde beim Vergleichsbeispiel 6 nach zwei Tagen abgebrochen, da die Wasserstoffentwicklung zu stark war.

## Patentansprüche

1. Metallpigmente mit Beschichtung,
**dadurch gekennzeichnet,**
**daß** die Beschichtung die Metallpigmente umhüllt und chemisch vernetzbare(s) und/oder unter Einwirkung von Wärme, IR-Strahlung, UV-Strählung und/oder Elektronenstrahlen vernetzbare(s) oligomere(s) und/oder polymere(s) thermoplastische(s) Bindemittel umfaßt, wobei die beschichteten Metallpigmente als Pulver, welches eine Korngröße d₅₀ von weniger als 190 µm aufweist, vorliegen und nach Aushärtung in einem Pulverlack korrosionsbeständig sind, wobei die Metallpigmente 20 bis 85 Gew.-% an oligomerem und/oder polymerem Bindemittel aufweisen, bezogen auf das Gesamtgewicht der beschichteten Metallpigmente.

2. Metallpigmente nach Anspruch 1,
**dadurch gekennzeichnet,**
**daß** die Korngröße d₅₀ der beschichteten Metallpigmente in einem Bereich von 5 bis 100 µm liegt.

3. Metallpigmente nach einem der vorhergehenden Ansprüche,
**dadurch gekennzeichnet,**
**daß** in der Beschichtung neben Bindemittel weitere Zusatz- und/oder Hilfsstoffe enthalten sind.

4. Metallpigmente nach Anspruch 3,
**dadurch gekennzeichnet,**
**daß** die Zusatz- und/oder Hilfsstoffe organische und/oder anorganische Buntpigmente und/oder Farbstoffe umfassen.

5. Metallpigmente nach Anspruch 3,
**dadurch gekennzeichnet,**
**daß** die Zusatz- und/oder Hilfsstoffe Härter, Photoinitiatoren und/oder Polymerisationsinitiatoren umfassen.

6. Metallpigmente nach Anspruch 3,
**dadurch gekennzeichnet,**
**daß** die Zusatz- und/oder Hilfsstoffe weitere Lackkomponenten, vorzugsweise Füllstoffe, Entgasungsmittel, filmbildende Hilfsmittel, Flammschutzmittel, Haftvermittler, Lichtschutzmittel, Mattierungsmittel, Polymerisationsinitiatoren, Radikalfänger, Rieselhilfen, Slipmittel, strahlungshärtende Reaktiwerdünner, UV-Absorber, Verlaufmittel, Vernetzungskatalysatoren und/oder Wachse umfassen.

7. Metallpigmente nach einem der vorhergehenden Ansprüche,
**dadurch gekennzeichnet,**
**daß** die Metallpigmente vor Aufbringung der Beschichtung mit Bindemittel mit einer zusätzlichen, vorzugsweise vernetzten, Schicht oder mehreren zusätzlichen, vorzugsweise vernetzten, Schichten vorbeschichtet sind.

8. Metallpigmente nach Anspruch 7,
**dadurch gekennzeichnet,**
**daß** die Metallpigmente mit Siliziumdioxid, Metalloxid, phosphororganischen Verbindungen, vorzugsweise Phosphorsäureestern und/oder Phosphonsäureverbindungen, und/oder Polymeren vorbeschichtet sind.

9. Metallpigmente nach Anspruch 7,
**dadurch gekennzeichnet,**
**daß** die Metallpigmente mit Haftervermittiern zur Bindemittelbeschichtung, vorzugsweise funktionalisierten Silanen, funktionalisierten Polymeren und/oder phosphororganischen Verbindungen, vorzugsweise Phosphorsäureester und/oder Phosphonsäureverbindungen, vorbeschichtet sind.

10. Metallpigmente nach einem der vorhergehenden Ansprüche,
**dadurch gekennzeichnet,**
**daß** das oder die Bindemittel aus der Gruppe ausgewählt werden, die aus Polyesterharzen, Epoxyharzen, Polyurethanharzen, UV-härtenden Systemen, Acrylaten und Mischungen davon besteht.

11. Metallpigmente nach Anspruch 10,
**dadurch gekennzeichnet,**
**daß** die Polyesterharze aus der Gruppe ausgewählt werden, die aus gesättigten OH-Gruppe-haltigen Polyesterharze mit einer OH-Zahl zwischen 30-150 mg KOH/g, gesättigten Carboxylgruppe-haltigen Polyesterharzen mit einer Säurezahl zwischen 25 - 70 mg KOH/g liegt und Mischungen davon besteht.

12. Metallpigmente nach Anspruch 10,
**dadurch gekennzeichnet,**
**daß** die Epoxyharze aus der Gruppe ausgewählt werden, die mehr als eine Epoxygruppe enthalten und vorzugsweise ein Epoxyäquivalentgewicht (EEW) von 400-2500 besitzen.

13. Metallpigmente nach Anspruch 10,
**dadurch gekennzeichnet,**
**daß** die Polyurethanharze aus der Gruppe ausgewählt werden, die aus OHfunktionellen Polyester- oder Polyacrylatharzen mit blockierten und/oder freien Polyisocyanaten und Mischungen davon besteht.

14. Metallpigmente nach Anspruch 10,
**dadurch gekennzeichnet,**
**daß** die UV-härtenden Systeme Verbindungen mit einfach und/oder mehrfach ungesättigten Doppelbindungen sind.

15. Metallpigmente nach einem der Ansprüche 5 bis 14,
**dadurch gekennzeichnet,**
**daß** der Härter aus der Gruppe ausgewählt wird, die aus Hydroxyalkylamin-haltigen Verbindungen, Glycidylgruppen-haltigen Verbindungen, Epoxygruppen-haltigen Verbindungen, Triglycidylisocyanuraten und Mischungen davon besteht.

16. Metallpigmente nach einem der vorhergehenden Ansprüche,
**dadurch gekennzeichnet,**
**daß** die Vernetzung des bzw. der Bindemittel(s) und gegebenenfalls vorhandenem Härter thermisch induzierbar ist.

17. Metallpigmente nach einem der vorhergehenden Ansprüche,
**dadurch gekennzeichnet,**
**daß** die Bindemittel-haltige Beschichtung Korrosionsinhibitoren enthält.

18. Metallpigmente nach Anspruch 17,
**dadurch gekennzeichnet,**
**daß** die Korrosionsinhibitoren anodische und/oder kathodische Korrosionsinhibitoren sind.

19. Metallpigmente nach Anspruch 17 oder 18,
**dadurch gekennzeichnet,**
**daß** Korrosionsinhibitoren Korrosionsschutzpigmente sind, die vorzugsweise aus der Gruppe, die aus Strontium-Zink-Phosphosilikat, Zink-Aluminium-Polyphosphathydrat, Zink-Calcium-Aluminium-Strontium-Phosphatsilikathydrat, Zink-Calcium-Strontium-Orthophosphatsilikathydrat, Strontium-Aluminium-Polyphosphathydrat, Calcium-Aluminium-Polyphosphatsilikathydrat und Natrium- und/oder Calcium- und/oder Zink-Molybdat und/oder Phospho-Molybdat und/oder Zinkphosphatkomplex und Mischungen davon besteht, ausgewählt werden.

20. Metallpigmente nach einem der Ansprüche 17 bis 19,
**dadurch gekennzeichnet,**
**daß** Korrosionsschutzpigmente eine mittlere Teilchengröße im Bereich von 0,1 bis 10 µm, vorzugsweise von 0,15 bis 5 µm, aufweisen.

21. Metallpigmente nach einem der Ansprüche 1 bis 20,
**dadurch gekennzeichnet,**
**daß** die Metallpigmente aus der Gruppe, die aus Aluminium-, Kupfer-, Eisen-, Titan-, Nickel-, Zink- und Messingpigmenten sowie Gemischen davon besteht, ausgewählt werden.

22. Metallpigmente nach einem der Ansprüche 1 bis 21,
**dadurch gekennzeichnet,**
**daß** die Metallpigmente oxidierte Metallpigmente, vorzugsweise oxidierte Kupfer- und/oder Messingpigmente, sind.

23. Metallpigmente nach einem der Ansprüche 1 bis 21,
**dadurch gekennzeichnet,**
**daß** die Metallpigmente naßchemisch oxidierte Aluminiumpigmente sind.

24. Metallpigmente nach einem der vorhergehenden Ansprüche,
**dadurch gekennzeichnet,**
**daß** die Metallpigmente metallhaltige Interferenzpigmente, die einen Metallkern und optional eine Metallbeschichtung aufweisen, sind.

25. Metallpigmente nach einem der vorhergehenden Ansprüche,
**dadurch gekennzeichnet,**
**daß** das Pulver zusammen mit einer Flüssigphase, vorzugsweise organischem Lösemittel, als Paste vorliegt.

26. Masterbatch für Pulverlacke,
**dadurch gekennzeichnet,**
**daß** der Masterbatch Metallpigmente nach einem der Ansprüche 1 bis 24 enthält.

27. Beschichtungszusammensetzung,
**dadurch gekennzeichnet,**
**daß** die Beschichtungszusammensetzung Metallpigmente nach einem der Ansprüche 1 bis 25 enthält, wobei die Metallpigmente nach Aushärtung der Beschichtungszusammensetzung korrosionsbeständig sind.

28. Beschichtungszusammensetzung nach Anspruch 27,
**dadurch gekennzeichnet,**
**daß** die Beschichtungszusammensetzung Pulverlack enthält.

29. Beschichtungszusammensetzung nach Anspruch 27 oder 28,
**dadurch gekennzeichnet,**
**daß** die Beschichtungszusammensetzung einen Metallgehalt von 0,5 bis 15 Gew.-%, vorzugsweise von 1 bis 12 Gew.-%, bezogen auf das Gesamtgewicht der Beschichtungszusammensetzung, aufweist.

30. Beschichtungszusammensetzung nach Anspruch 29,
**dadurch gekennzeichnet,**
**daß** die Beschichtungszusammensetzung einen Metallgehalt von 2 bis 8 Gew.-% aufweist.

31. Beschichtungszusammensetzung nach einem der Ansprüche 28 bis 30,
**dadurch gekennzeichnet,**
**daß** der Pulverlack und die Beschichtung der Metallpigmente das bzw. die gleiche(n) Bindemittel enthalten.

32. Beschichteter Gegenstand,
**dadurch gekennzeichnet,**
**daß** der Gegenstand mit Metallpigmenten gemäß einem der Ansprüche 1 bis 25 oder mit einer Beschichtungszusammensetzung gemäß einem der Ansprüche 27 bis 31 beschichtet ist.

33. Beschichteter Gegenstand nach Anspruch 32,
**dadurch gekennzeichnet,**
**daß** der Gegenstand ein Fassadenelement, vorzugsweise eine Fassadenplatte, ein Fensterrahmen, eine Fahrzeugkarosserie, vorzugsweise eine Karosserie eines Kraftfahrzeuges, oder ein Rahmen eines Fahrzeugs, vorzugsweise eines Fahrrads oder Motorrads, ist.

34. Verfahren zur Herstellung eines Metallpigmentes umfassend die Schritte:
a) Herstellen einer Lösung oder Dispersion eines oligomeren und/oder polymeren Bindemittels in einem organischen Lösemittel,
b) Beschichten des Metallpigmentes mit dem Bindemitteln durch
i) Dispergieren des Metallpigmentes in der Lösung oder Dispersion von a) und anschließendem Versprühen
oder
ii) Versprühen der Lösung oder Dispersion aus a) auf in einem Gasstrom verwirbelte Metallpigmente,
c) Trocknen der mit Bindemittel beschichteten Metallpigmente in einem bewegten Gasstrom,
wobei die Beschichtung die Metallpigmente umhüllt und chemisch vernetzbare(s) und/oder unter Einwirkung von Wärme, IR-Strahlung, UV-Strahlung und/oder Elektronenstrahlen vernetzbare(s) oligomere(s) und/oder polymere(s) thermoplatisches Bindemittel umfaßt, wobei die beschichteten Metallpigmente als Pulver, welches eine Korngröße d₅₀ von weniger als 190 µm aufweist, vorliegen und nach Aushärtung in einem Pulverlack korrosionsbeständig sind.

35. Verfahren zur Herstellung eines Metallpigmentes nach Anspruch 34,
**dadurch gekennzeichnet,**
**dass** die mit Bindemittel beschichteten Metallpigmente nach Schritt c) zusätzlich einer Größenklassifikation unterzogen werden.

36. Verfahren nach einem der Ansprüche 34 oder 35,
**dadurch gekennzeichnet,**
**daß** dem in Lösemittel gelösten oder dispergierten oligomeren und/oder polymeren Bindemittel, vorzugsweise vor dem Inkontaktbringen mit den Metallpigmenten, weitere Zusatz- und/oder Hilfsstoffe zugesetzt werden.

37. Verfahren nach Anspruch 36,
**dadurch gekennzeichnet,**
**daß** die Zusatz- und/oder Hilfsstoffe Härter, Photoinitiatoren und/oder Polymerisationsinitiatoren umfassen.

38. Verfahren nach Anspruch 36,
**dadurch gekennzeichnet, daß** die Zusatz- und/oder Hilfsstoffe Korrosionsinhibitoren, vorzugsweise Korrosionsschutzpigmente, umfassen.

39. Verfahren nach einem der Ansprüche 34 bis 38,
**dadurch gekennzeichnet,**
**daß** als Lösemittel Wasser, organisches Lösemittel oder Wasser-haltiges organisches Lösemittel verwendet wird.

40. Verfahren nach einem der Ansprüche 34 bis 39,
**dadurch gekennzeichnet;**
**daß** die Schritte (bi) und (c) zusammengefasst werden, indem das Versprühen der beschichteten Metallpigmente und das Entfernen des Lösemittels durch Sprühtrocknen erfolgt.

41. Verfahren nach einem der Ansprüche 34 bis 39,
**dadurch gekennzeichnet,**
**daß** die Schritte (bii) und (c) zusammengefasst werden, indem das Beschichten und Trocknen der Metallpigmente in einem Fluidbett oder einer Wirbelschicht erfolgt, wobei die im Lösemittel gelösten oder dispergierten oligomeren und/oder polymeren Bindemittel eingesprüht werden und das Lösemittel während der Verwirbelung in dem Fluidbett oder der Wirbelschicht entfernt wird.

42. Verwendung des Metallpigmentes nach einem der Ansprüche 1 bis 24 in Farben, Lacken, Pulverlacken, Druckfarben, Kunststoffen oder Nagellack.

43. Verwendung des Metallpigmentes in einem Pulverlack gemäß Anspruch 42, **dadurch gekennzeichnet, dass** es sich bei dem Pulverlack um einen hochbeständigen Pulverlack für die Fassadenbeschichtung handelt.

44. Nagellack, **dadurch gekennzeichnet,**
**daß** es Metallpigmente nach einem der Ansprüche 1 bis 25 enthält.

## Claims

1. Metal pigments with a coating,
**characterised in that**
the coating encases the metal pigments and contains oligomeric and/or polymeric, thermoplastic binding agents which can be chemically cross-linked and/or cross-linked under the effect of heat, IR radiation, UV radiation and/or electron radiation, which coated metal pigments are prepared in the form of a powder with a grain size d₅₀ of less than 190 µm and are resistant to corrosion after curing in a powder varnish, and the metal pigments contain 20 to 85 % by weight of oligomeric and/or polymeric binding agents by reference to the total weight of the coated metal pigments.

2. Metal pigments as claimed in claim 1,
**characterised in that**
the grain size d₅₀ of the coated metal pigments is within a range of from 5 to 100 µm.

3. Metal pigments as claimed in one of the preceding claims,
**characterised in that**
the coating contains other additives and/or auxiliary agents in addition to binding agents.

4. Metal pigments as claimed in claim 3,
**characterised in that**
the additives and/or auxiliary agents include organic and/or inorganic coloured pigments and/or dyes.

5. Metal pigments as claimed in claim 3,
**characterised in that**
the additives and/or auxiliary agents include hardeners, photo-initiators and/or polymerisation initiators.

6. Metal pigments as claimed in claim 3,
**characterised in that**
the additives and/or auxiliary agents include other varnish components, preferably fillers, degassing agents, film-forming agents, flame retardants, primers, anti-fading agents, matting agents, polymerisation initiators, radical scavengers, anti-caking agents, anti-slip agents, radiation-curing reactive thinners, UV absorbers, coalescing agents, cross-linking catalysts and/or waxes.

7. Metal pigments as claimed in one of the preceding claims,
**characterised in that**
prior to being coated with binding agents, the metal pigments are pre-coated with an additional, preferably cross-linked, coating or several additional, preferably cross-linked coatings.

8. Metal pigments as claimed in claim 7,
**characterised in that**
the metal pigments are pre-coated with silicium dioxide, metal oxide, phospho-organic compounds, preferably phosphoric acid esters and/or phosphonic acid compounds, and/or polymers.

9. Metal pigments as claimed in claim 7,
**characterised in that**
the metal pigments are pre-coated with primers to provide a coating of binding agent, preferably functionalised silanes, functionalised polymers and/or phosphoric organic compounds, preferably phosphoric acid esters and/or phosphonic acid compounds.

10. Metal pigments as claimed in one of the preceding claims,
**characterised in that**
the binding agent or agents is or are selected from the group comprising polyester resins, epoxy resins, polyurethane resins, UV-hardening systems, acrylates and mixtures thereof.

11. Metal pigments as claimed in claim 10,
**characterised in that**
the polyester resins are selected from the group comprising saturated polyester resins containing an OH group with an OH number of between 30-150 mg KOH/g, saturated polyester resins containing a carboxyl group with an acid number of between 25 - 70 mg KOH/g.

12. Metal pigments as claimed in claim 10,
**characterised in that**
the epoxy resins are selected from the group containing more than one epoxy group and preferably have an epoxy equivalent weight (EEW) of 400-2500.

13. Metal pigments as claimed in claim 10,
**characterised in that**
the polyurethane resins are selected from the group containing OH-functional polyester or polyacrylate resins with blocked and/or free polyisocyanates and mixtures thereof.

14. Metal pigments as claimed in claim 10,
**characterised in that**
the UV-hardening systems are compounds with one and/or more unsaturated double bonds.

15. Metal pigments as claimed in one of claims 5 to 14,
**characterised in that**
the hardener is selected from the group comprising compounds containing hydroxyalkylamine, compounds containing glycidyl groups, compounds containing epoxy groups, triglycidyl-isocyanurates and mixtures thereof.

16. Metal pigments as claimed in one of the preceding claims,
**characterised in that**
cross-linking of the binding agent(s) and optionally the hardener, if one is provided, can be thermally induced.

17. Metal pigments as claimed in one of the preceding claims,
**characterised in that**
the coating containing binding agent contains corrosion inhibitors.

18. Metal pigments as claimed in claim 17,
**characterised in that**
the corrosion inhibitors are anodic and/or cathodic corrosion inhibitors.

19. Metal pigments as claimed in claim 17 or 18,
**characterised in that**
corrosion inhibitors are anti-corrosion pigments which are preferably selected from the group comprising strontium-zinc phospho-silicate, zinc-aluminium polyphosphate hydrate, zinc-calcium-aluminium-strontium-phosphate silicate hydrate, zinc-calcium-strontium-orthophosphate silicate hydrate, strontium-aluminium-polyphosphate hydrate, calcium-aluminium polyphosphate silicate hydrate and sodium and/or calcium and/or zinc molybdate and/or phospho-molybdate and/or zinc phosphate complex and mixtures thereof.

20. Metal pigments as claimed in one of claims 17 to 19,
**characterised in that**
anti-corrosive pigments have a mean particle size within the range of from 0.1 to 10 µm, preferably from 0.15 to 5 µm.

21. Metal pigments as claimed in one of claims 1 to 20,
**characterised in that**
the metal pigments are selected from the group comprising aluminium, copper, iron, titanium, nickel, zinc and brass pigments as well as mixtures thereof.

22. Metal pigments as claimed in one of claims 1 to 21,
**characterised in that**
the metal pigments are oxidised metal pigments, preferably oxidised copper and/or brass pigments.

23. Metal pigments as claimed in one of claims 1 to 21,
**characterised in that**
the metal pigments are aluminium pigments oxidised by a wet chemical process.

24. Metal pigments as claimed in one of the preceding claims,
**characterised in that**
the metal pigments are interference pigments containing metal, which have a metal core and optionally a metal coating.

25. Metal pigments as claimed in one of the preceding claims,
**characterised in that**
the powder together with the liquid phase, preferably organic solvent, is prepared as a paste.

26. Master batch for powder varnishes,
**characterised in that**
the master batch contains metal pigments as claimed in one of claims 1 to 24.

27. Coating composition
**characterised in that**
the coating composition contains metal pigments as claimed in one of claims 1 to 25 and the metal pigments are resistant to corrosion once the coating composition has been cured.

28. Coating composition as claimed in claim 27,
**characterised in that**
the coating composition contains powder varnish.

29. Coating composition as claimed in claim 27 or 28,
**characterised in that**
the coating composition has a metal content of 0.5 to 15 % by weight, preferably 1 to 12 % by weight, by reference to the total weight of the coating composition.

30. Coating composition as claimed in claim 29,
**characterised in that**
the coating composition has a metal content of from 2 to 8 % by weight.

31. Coating composition as claimed in one of claims 28 to 30,
**characterised in that**
the powder varnish and the coating of the metal pigments contain the same binding agent(s).

32. Coated object,
**characterised in that**
the object is coated with metal pigments as claimed in one of claims 1 to 25 or with a coating composition as claimed in one of claims 27 to 31.

33. Coated object as claimed in claim 32,
**characterised in that**
the object is a facade element, preferably a facade panel, a window frame, a vehicle body, preferably a body of an automotive vehicle or a frame of a vehicle, preferably a bicycle or motorcycle.

34. Method of producing a metal pigment, comprising the steps of:
a) producing a solution or dispersion of an oligomeric and/or polymeric binding agent in an organic solvent,
b) coating the metal pigment with the binding agent by
i) dispersing the metal pigment in the solution or dispersion from a) followed by spraying
or
ii) spraying the solution or dispersion from a) onto metal pigments swirled in a gas flow,
c) drying the metal pigments coated with binding agent in a moved gas flow,
and the coating encloses the metal pigments and contains oligomeric and/or polymeric binding agent(s) which can be chemically cross-linked or cross-linked under the effect of heat, IR radiation, UV radiation and/or electron radiation, and the coated metal pigments are prepared in the form of a powder with a grain size d₅₀ of less than 190 µm, and are resistant to corrosion after curing in a powder varnish.

35. Method of producing a meal pigment as claimed in claim 34,
**characterised in that**
the metal pigments coated with binding agent are additionally subjected to a size classification after step c).

36. Method as claimed i one of claims 34 or 35,
**characterised in that**
other additives and/or auxiliary agents are added to the oligomeric and/or polymeric binding agents dissolved or dispersed in solvent, preferably prior to bringing them into contact with the metal pigments.

37. Method as claimed in claim 36,
**characterised in that**
the additives and/or auxiliary agents include hardeners, photo-initiators and/or polymerisation initiators.

38. Method as claimed in claim 36,
**characterised in that** the additives and/or auxiliary agents include corrosion inhibitors, preferably anti-corrosive pigments.

39. Method as claimed in one of claims 34 to 38,
**characterised in that**
water, organic solvent or organic solvent containing water is used as the solvent.

40. Method as claimed in one of claims 24 to 39,
**characterised in that**
steps (bi) and (c) are combined by spraying the coated metal pigments and removing the solvent by spray-drying.

41. Method as claimed in one of claims 34 to 39,
**characterised in that**
steps (bii) and (c) are combined by coating and drying the metal pigments in a fluid bed or fluidised bed, and the ologimeric and/or polymeric binding agents dissolved or dispersed in the solvent are sprayed in and the solvent is removed during swirling in the fluid bed or fluidised bed.

42. Use of the metal pigment as claimed in one of claims 1 to 24 in dyes, varnishes, powder varnishes, printing inks, plastics or nail varnish.

43. Use of the metal pigment in a powder varnish as claimed in claim 42,
**characterised in that**
the powder varnish is a highly resistant powder varnish for coating facades.

44. Nail varnish,
**characterised in that**
it contains metal pigments as claimed in one of claims 1 to 25.

## Revendications

1. Pigments métalliques avec revêtement,
**caractérisés en ce**
**que** le revêtement enrobe les pigments métalliques et comprend un agent liant thermoplastique à base d'oligomères et/ou de polymères réticulables par voie chimique et/ou réticulables par l'action de la chaleur, d'un rayonnement IR, d'un rayonnement UV et/ou d'un faisceau d'électrons, les pigments métalliques enduits se présentant sous forme de poudre, d'une grosseur de grains d₅₀ inférieure à 190 µm, et étant, après durcissement dans une peinture en poudre, résistants à la corrosion, les pigments métalliques présentant 20 à 85 % en poids d'agent liant à base d'oligomères et/ou de polymères, sur la base du poids total des pigments métalliques enduits.

2. Pigments métalliques selon la revendication 1,
**caractérisés en ce**
**que** la grosseur de grain d₅₀ des pigments métalliques enduits se trouve dans une plage allant de 5 à 100 µm.

3. Pigments métalliques selon l'une quelconque des revendications précédentes,
**caractérisés en ce**
**que** le revêtement contient, en plus du liant, d'autres substances additionnelles et/ou auxiliaires.

4. Pigments métalliques selon la revendication 3,
**caractérisés en ce**
**que** les substances additionnelles et/ou auxiliaires comprennent des pigments colorés et/ou des colorants organiques et/ou inorganiques.

5. Pigments métalliques selon la revendication 3,
**caractérisés en ce**
**que** les substances additionnelles et/ou auxiliaires comprennent des agents durcissants, des photoinitiateurs, et/ou des initiateurs de polymérisation.

6. Pigments métalliques selon la revendication 3,
**caractérisés en ce**
**que** les substances additionnelles et/ou auxiliaires comprennent d'autres composants de peinture, de préférence des charges, des agents de dégazage, des auxiliaires formant un film, des agents ignifugeants, des auxiliaires d'adhésion, des agents protégeant de la lumière, des agents matifiants, des initiateurs de la polymérisation, des inhibiteurs de radicaux, des auxiliaires d'écoulement, des lubrifiants, des dissolvants réactifs durcissant par rayonnement, des agents absorbant les UV, des auxiliaires d'application, des catalyseurs de la réticulation et/ou des cires.

7. Pigments métalliques selon l'une quelconque des revendications précédentes,
**caractérisés en ce**
**que** les pigments métalliques sont enduits au préalable, avant application du revêtement d'agent liant, d'une couche additionnelle, de préférence réticulée, ou de plusieurs couches additionnelles, de préférence réticulées.

8. Pigments métalliques selon la revendication 7,
**caractérisés en ce**
**que** les pigments métalliques sont enduits au préalable de dioxyde de silicium, d'oxyde métallique, des composés organophosphorés, de préférence d'esters d'acide phosphorique et/ou de composés d'acide phosphonique, et/ou de polymères.

9. Pigments métalliques selon la revendication 7,
**caractérisés en ce**
**que** les pigments métalliques sont enduits au préalable d'auxiliaires d'adhésion au revêtement d'agent liant, de préférence de silanes fonctionnalisés, de polymères fonctionnalisés et/ou de composés organophosphorés, de préférence d'esters d'acide phosphorique et/ou de composés d'acide phosphonique.

10. Pigments métalliques selon l'une quelconque des revendications précédentes,
**caractérisés en ce**
**que** l'agent liant/les agentes liants est/sont choisi(s) dans le groupe comprenant les résines polyester, les résines époxy, les résines polyuréthane, les systèmes durcissant aux UV, les acrylates et des mélanges de ceux-ci.

11. Pigments métalliques selon la revendication 10,
**caractérisés en ce**
**que** les résines polyester sont choisies dans le groupe comprenant les résines polyester saturées contenant des groupes OH présentant une teneur en groupes OH comprise entre 30 et 150 mg de KOH par gramme, des résines polyester saturées contenant des groupes carboxyle présentant une teneur en acide comprise entre 25 et 70 mg de KOH par gramme, et des mélanges de celles-ci.

12. Pigments métalliques selon la revendication 10,
**caractérisés en ce**
**que** les résines époxy sont choisies dans le groupe comprenant celles qui contiennent plus d'un groupe époxy et de préférence un poids équivalent en époxy (EEW) allant de 400 à 2 500.

13. Pigments métalliques selon la revendication 10,
**caractérisés en ce**
**que** les résines polyuréthane sont choisies dans le groupe comprenant les résines polyester ou polyacrylate fonctionnalisées avec des groupes OH présentant des polyisocyanates bloqués ou libres et des mélanges de celles-ci.

14. Pigments métalliques selon la revendication 10,
**caractérisés en ce**
**que** les composés des systèmes durcissant aux UV présentent des doubles liaisons avec des insaturations simples et/ou multiples.

15. Pigments métalliques selon l'une quelconque des revendications 5 à 14,
**caractérisés en ce**
**que** les agents durcissants sont choisis dans le groupe comprenant des composés contenant une hydroxyalkylamine, des composés comprenant des groupes glycidyle, des composés comprenant des groupes époxy, des triglycidylisocyanurates et des mélanges de ceux-ci.

16. Pigments métalliques selon l'une quelconque des revendications précédentes,
**caractérisés en ce**
**que** la réticulation respective de l'agent liant/des agents liants, et éventuellement de l'agent durcissant ajouté, peut être induite thermiquement.

17. Pigments métalliques selon l'une quelconque des revendications précédentes,
**caractérisés en ce**
**que** le revêtement contenant l'agent liant contient des inhibiteurs de la corrosion.

18. Pigments métalliques selon la revendication 17,
**caractérisés en ce**
**que** les inhibiteurs de la corrosion sont des inhibiteurs de la corrosion anodiques et/ou cathodiques.

19. Pigments métalliques selon la revendication 17 ou 18,
**caractérisés en ce**
**que** les inhibiteurs de la corrosion sont des pigments protecteurs contre la corrosion, qui sont de préférence choisis dans le groupe des phosphosilicates de strontium et de zinc, des polyphosphates hydratés de zinc et d'aluminium, des phosphosilicates hydratés de zinc, de calcium, d'aluminium et de strontium, des orthophosphosilicates hydratés de zinc, de calcium et de strontium, des polyphosphates hydratés de strontium et d'aluminium, des polyphosphosilicates hydratés de calcium et d'aluminium et des molybdates et/ou phosphomolybdates de sodium et/ou de calcium et/ou de zinc et/ou de complexes zinc-phosphate, et de mélanges de ceux-ci.

20. Pigments métalliques selon l'une quelconque des revendications 17 à 19,
**caractérisés en ce**
**que** les pigments protecteurs contre la corrosion présentent une taille de particules moyenne dans la plage allant de 0,1 à 10 µm, de préférence allant de 0,15 à 5 µm.

21. Pigments métalliques selon l'une quelconque des revendications 1 à 20,
**caractérisés en ce**
**que** les pigments métalliques sont choisis dans le groupe comprenant les pigments à base d'aluminium, de cuivre, de fer, de titane, de nickel, de zinc et de laiton, ainsi que des mélanges de ceux-ci.

22. Pigments métalliques selon l'une quelconque des revendications 1 à 21,
**caractérisés en ce**
**que** les pigments métalliques sont des pigments métalliques oxydés, de préférence des pigments de cuivre et/ou de laiton oxydés.

23. Pigments métalliques selon l'une quelconque des revendications 1 à 21,
**caractérisés en ce**
**que** les pigments métalliques sont des pigments d'aluminium oxydés par un procédé chimique par voie humide.

24. Pigments métalliques selon l'une quelconque des revendications précédentes,
**caractérisés en ce**
**que** les pigments métalliques sont des pigments d'interférence contenant du métal, qui présentent un noyau métallique et éventuellement un revêtement métallique.

25. Pigments métalliques selon l'une quelconque des revendications précédentes,
**caractérisés en ce**
**que** la poudre, conjointement à une phase liquide, de préférence un solvant organique, se présente sous forme de pâte.

26. Mélange maître pour peinture en poudre,
**caractérisé en ce**
**que** le mélange maître contient des pigments métalliques selon l'une quelconque des revendications 1 à 24.

27. Composition de revêtement,
**caractérisée en ce**
**que** la composition de revêtement contient des pigments métalliques selon l'une quelconque des revendications 1 à 25, les pigments métalliques étant, après durcissement de la composition de revêtement, résistants à la corrosion.

28. Composition de revêtement selon la revendication 27,
**caractérisée en ce**
**que** la composition de revêtement contient de la peinture en poudre.

29. Composition de revêtement selon la revendication 27 ou 28,
**caractérisée en ce**
**que** la composition de revêtement présente une teneur en métaux allant de 0,5 à 15 % en poids, de préférence allant de 1 à 12 % en poids, sur la base du poids total de la composition de revêtement.

30. Composition de revêtement selon la revendication 29,
**caractérisée en ce**
**que** la composition de revêtement présente une teneur en métaux de 2 à 8 % en poids.

31. Composition de revêtement selon l'une quelconque des revendications 28 à 30,
**caractérisée en ce**
**que** la peinture en poudre et le revêtement des pigments métalliques contiennent, respectivement, le(les) même(s) agent(s) liant(s).

32. Objet enduit,
**caractérisé en ce**
**que** l'objet est enduit de pigments métalliques selon l'une quelconque des revendications 1 à 25 ou avec une composition de revêtement selon l'une quelconque des revendications 27 à 31.

33. Objet enduit selon la revendication 32,
**caractérisé en ce**
**que** l'objet est un élément de façade, de préférence une plaque de façade, un cadre de fenêtre, une carrosserie de véhicule, de préférence une carrosserie d'automobile, ou un cadre de véhicule, de préférence d'une bicyclette ou d'une motocyclette.

34. Procédé de fabrication d'un pigment métallique comprenant les étapes consistant à :
a) fabriquer une solution ou une dispersion d'un agent liant oligomère et/ou polymère dans un solvant organique,
b) enduire le pigment métallique avec l'agent liant
i) en dispersant le pigment métallique dans la solution ou dispersion de a) et en le pulvérisant ensuite, ou
ii) en pulvérisant la solution ou la dispersion obtenue en a) sur un pigment métallique mis en suspension dans un courant de gaz,
c) en séchant les pigments métalliques enduits d'agent liant dans un courant de gaz en mouvement, le revêtement enrobant les pigments métalliques et comprenant un agent liant thermoplastique à base d'oligomères et/ou de polymères réticulables par voie chimique et/ou réticulables par l'action de la chaleur, d'un rayonnement IR, d'un rayonnement UV et/ou d'un faisceau d'électrons, les pigments métalliques enduits se présentant sous forme de poudre, qui présente une grosseur de grains d₅₀ inférieure à 190 µm, et étant, après durcissement dans une peinture en poudre, résistants à la corrosion.

35. Procédé de fabrication d'un pigment métallique selon la revendication 34,
**caractérisé en ce**
**que** les pigments métalliques enduits avec l'agent liant selon l'étape c) sont de plus soumis à une classification en fonction de leur taille.

36. Procédé selon l'une quelconque des revendications 34 ou 35,
**caractérisé en ce**
**que**, à l'agent liant oligomère et/ou polymère dissous dans du solvant ou dispersé, on ajoute, de préférence avant la mise en contact avec les pigments métalliques, d'autres substances additionnelles et/ou auxiliaires.

37. Procédé selon la revendication 36,
**caractérisé en ce**
**que** les substances additionnelles et/ou auxiliaires comprennent des agents durcissants, des photoinitiateurs, et/ou des initiateurs de polymérisation.

38. Procédé selon la revendication 36,
**caractérisé en ce**
**que** les substances additionnelles et/ou auxiliaires comprennent des inhibiteurs de la corrosion, de préférence des pigments protecteurs contre la corrosion.

39. Procédé selon l'une quelconque des revendications 34 à 38,
**caractérisé en ce**
**que** l'on utilise, comme solvant, de l'eau, un solvant organique ou un solvant organique contenant de l'eau.

40. Procédé selon l'une quelconque des revendications 34 à 39,
**caractérisé en ce**
**que** les étapes (bi) et (c) sont combinées, dans la mesure où la pulvérisation des pigments métalliques enduits et l'élimination du solvant sont effectuées par séchage par pulvérisation.

41. Procédé selon l'une quelconque des revendications 34 à 39,
**caractérisé en ce**
**que** les étapes (bii) et (c) sont combinées, dans la mesure où le revêtement et le séchage des pigments métalliques sont effectués dans un lit fluide ou une couche fluidisée, les agents liants oligomères et/ou polymères dissous dans le solvant ou dispersés étant pulvérisés et le solvant étant éliminé pendant la mise en suspension dans le lit fluide ou la couche fluidisée.

42. Utilisation du pigment métallique selon l'une quelconque des revendications 1 à 24 dans des peintures, laques, peintures en poudre, encres d'impression, matières plastiques ou vernis à ongles.

43. Utilisation d'un pigment métallique dans une peinture en poudre selon la revendication 42, **caractérisée en ce qu'**en tant que peinture en poudre, il s'agit d'une peinture en poudre à résistance élevée destinée au revêtement de façades.

44. Vernis à ongles,
**caractérisé en ce**
**qu'**il contient des pigments métalliques selon l'une quelconque des revendications 1 à 25.
